(19) Europäisches Patentamt
European Patent Office
Office européen des brevets

(11) EP 0 460 862 B1

(12) **EUROPEAN PATENT SPECIFICATION**

(45) Date of publication and mention
of the grant of the patent:
**25.03.1998 Bulletin 1998/13**

(51) Int Cl.6: **G01S 5/14**, G01S 1/04

(21) Application number: **91304868.2**

(22) Date of filing: **29.05.1991**

(54) **Global positioning system receiver**

GPS-Empfänger

Récepteur-GPS

(84) Designated Contracting States:
**BE DE DK ES FR GB IT NL SE**

(30) Priority: **04.06.1990 US 532834**

(43) Date of publication of application:
**11.12.1991 Bulletin 1991/50**

(73) Proprietor: **RAYTHEON COMPANY**
**Lexington Massachusetts 02173 (US)**

(72) Inventor: **Cantwell, Robert H.**
**Sudbury, Massachusetts (US)**

(74) Representative: **Jackson, David Spence et al**
**REDDIE & GROSE**
**16, Theobalds Road**
**London, WC1X 8PL (GB)**

(56) References cited:
**EP-A- 0 351 156**          **WO-A-87/01540**

- **MEDITERRANEAN ELECTROTECHNICAL CONFERENCE 24.-26.03. 1987, IEEE, NEW YORK, US. pages 157 - 161 SUST ET AL 'ALL DIGITAL SIGNAL PROCESSING IN A SPREAD SPECTRUM COMMUNICATION SYSTEM'**
- **"Adaptive A/D Conveter to Suppress CW Interference in DSPN Spread Spectrum Communications" by F. Amoroso in IEEE Transactions on Communications, Volume COM-31, pages 1117-1123, October 1983**

EP 0 460 862 B1

**Description**

The present invention relates to a Global Positioning System receiver comprising:

receiving means for performing sampling of a received PN-code modulated carrier to generate in-phase (I) and quadrature-phase (Q) samples;
signal processor means coupled to outputs of said receiving means for removing a doppler frequency and PN-code modulation from said modulated carrier, said signal processor means comprising a plurality of channels, each of said channels including a correlator means for correlating said I and Q samples with at least an in-phase component (IREFX) of an internally generated PN-code reference;
and means coupled to said signal processor means for processing the outputs of the correlator means to determine the phase of said carrier signal, to provide multi-channel control signals to said signal processor means and to estimate a pseudo-range and a pseudo-range rate.

Phase code modulation is ideally suited to measuring time or time delay. The time delay is a measure of range while the difference in phase measurements taken at fixed time intervals is a measure of frequency. The phase code modulation is compared (correlated) with the expected phase or replica of the phase code modulation. Typical phase code modulations include not only Binary Phase-Shift Keying (BPSK), but also Binary Frequency-Shift Keying (BFSK).

The Global Positioning System (GPS) is a navigation system based on eighteen satellites in orbit. When fully operational the eighteen satellites will be evenly dispersed in three, inclined, 12-hour circular orbits chosen to ensure continuous 24-hour coverage. The GPS will provide extremely accurate time and three-dimensional position and velocity information to users anywhere in the world. Normally, four satellites are required for precise location determination in four dimensions (latitude, longitude, altitude and time). The location determinations are based on measurement of the transit time of RF signals from the satellites selected from the total of eighteen. Each satellite transmits a different pair of L-band carrier signals including an L1 signal at 1575.42 MHz and an L2 signal at 1227.6 MHz. The L1 and L2 signals are biphase modulated by two pseudo-random noise (PN) codes comprising a P-code which provides for precision measurement of transit time and a C/A (coarse/acquisition) code which provides for a coarse measurement of transit time and provides for easy lock-on to the desired signal suitable for many commercial purposes. Since each satellite uses different PN-codes, a signal transmitted by a particular satellite can be selected by generating and matching (correlating) the corresponding PN-code pattern.

The P-code is the principal navigation pseudo-random noise (PN) ranging code of the Global Positioning System. The P-code is a repetitive sequence of bits referred to as chips (in spread spectrum parlance). The P-code for each satellite is the product of two PN-codes X1 and X2 where X1 has a period of 1.5 sec or 15,345,000 chips and X2 has a period of 15,345,037 or 37 chips longer. The P-code generator in a GPS receiver reproduces a replica of the P-code that is generated by a P-code generator of a particular GPS satellite and each satellite produces a unique P-code. The C/A code is a relatively short code of 1023 bits of 1 msec duration at a 1.023 Mbps bit rate. This code is selected to provide good multiple access properties for its period.

EP-A-0 351 156 describes a GPS receiver in which received L1 and L2 signals are separately converted to different intermediate frequencies. The down converted L1 signal is supplied to each of a plurality of channels for digital processing, the number of channels corresponding to the number of satellites to be monitored. In each channel, a numerically controlled oscillator generates an estimate of the down converted L1 carrier frequency. This estimate signal and the incoming down converted L1 signal are applied to a multiplicative mixer. Navigation data and C/A code from the output of the mixer are supplied to an early-late tracking loop that generates an estimate of the C/A code on the received L1 signal. The estimated C/A code is supplied as one input to a further multiplicative mixer that receives as its other input the down converted L1 signal and therefore produces a down converted L1 carrier modulated with navigation data only, the C/A code having been removed.

WO-A-8701540 describes a GPS receiver that uses techniques similar to those of EP-A-0 351 156 but in which the received L1 signal is down converted to 9.548 MHz, sampled at 38.192 MHz, and then supplied to a mixer/decimator that performs quadrature mixing to translate the centre frequency from 9.548 MHz to substantially zero Hz, sample rate reduction, and outputting of an in-phase I component and an out-of-phase or quadrature Q component. The I and Q components are both coupled to each one of four channel processing units. Each channel processing unit performs code despreading and related tasks for one of four satellite signals. Each channel processing unit includes a C/A code generator which produces a prompt signal that is a duplicate of the C/A code of the desired satellite, and a late-early signal that is one half of the arithmetic difference between the prompt signal delayed (late) by a selected time interval, and a prompt signal advanced (early) by the same time interval, so that the late-early signal can have any one of the three values +1, -1 and 0, the prompt signal being either +1 or -1. The prompt output of the C/A code generator is coupled to one input each of two multipliers. The second inputs of these multipliers are coupled respectively to the I and Q outputs of the mixer/decimator. For proper time alignment, the multipliers remove the C/A code from the signal

2

whose code matches that produced by the C/A code generator. The late-early output of the C/A code generator is coupled to one input each of two further multipliers. The second inputs of the further multipliers are coupled respectively to the I and Q outputs of the mixer/decimator. Differential I and Q signals are output from the further multipliers for use in delay locking.

An all-digital GPS receiver is described in a paper entitled "All-Digital GPS Receiver Mechanization", by Peter C. Ould and Robert J. Van Wechel, reprinted by the Institute of Navigation, Global Positioning System Papers published in Navigation, Vol. 2, pp. 25-35, (also presented at ION Aerospace Meeting, April, 1981). Code correlation is accomplished digitally using either digital matched filters (DMF) or digital correlators, depending upon performance requirements. In particular, a correlator is described that is a three-sample, 2-bit correlator used for both C/A and P-codes wherein the quantized samples are scaled to produce all positive values so that simple up/down counters can be used to integrate the most significant bit (MSB) and least significant bit (LSB) independently. However, this approach requires one correlator/integrator in the signal processor of the GPS receiver for each analog-to-digital bit. In a subsequent paper entitled "All-Digital GPS Receiver Mechanization-Six Years Later" by J.S. Graham, P.C. Ould and R.J. Van Wechel, Journal of Institute of Navigation, National Technical Meeting, January 1987, a GPS receiver of the kind defined hereinbefore at the beginning is described in which the correlator means comprises a multi-tap correlator/integrator that is predominantly a set of N times Y 16-bit up/down counters where N is the number of A/D bits and Y is the multiple number of taps. When sampled signals are correlated against a replica of the transmitted code, the counters count up or down to indicate a match or mismatch, respectively for each A/D bit. At the end of the correlation time interval the counts for each A/D bit are stored in holding registers accessible by a microprocessor bus. This integrate and dump function which is the optimal filter requires weighting of each 16-bit up/down counter output. The N 16-bit output weighted words are accumulated for detection of pseudo-random noise code buried in Gaussian noise. However, these approaches for pseudo-random noise code correlation result in considerable hardware even when implemented with VLSI circuitry.

In a paper entitled "All digital signal processing in a spread spectrum communication system", M.K. Sust and M. Kowatsch describe, at pages 157 to 161 of the Proceedings of the Mediterranean Electrotechnical Conference (Melecon 87), Rome, 24-26 March 1987, published by IEEE, New York, a direct-sequence spread spectrum system employing digital matched filters. In the transmitter, one PN code of length N is assigned to logic zeros of the data, and another PN code also of length N is assigned to the logic ones. The data is substituted by the two PN codes. The resulting code stream modulates a carrier at the code rate (chip rate), which is N times the data rate. At the receiver, the received signal is bandpass filtered and split into two channels, which are in phase quadrature, by multiplicative mixing with a local oscillator frequency and a 90° shifted counterpart. The signals in both channels are low pass filtered and hard limited to provide digital outputs. In each channel the output of the hard limiter is sampled at the chip rate and supplied to two digital correlators, one of which compares the digitised signal with a replica of the logic one code, and the other of which compares with digitised signal with a replica of the logic zero code. Each correlator consists of a reference register, of N cells, containing the replica code, an input shift register of N cells into which the digitised signal is clocked, N exclusive -OR gates, each comparing the respective digits in a respective cell of the reference register and a corresponding cell of the input register, and an adder for summing the outputs of the N exclusive -OR gates. Corresponding quadrature components are squared and summed.

In the papers, mentioned hereinbefore, by Graham, Ould, and Van Wechel, and Sust and Kowatsch references are made to a paper entitled "Adaptive A/D Converter to Suppress CW Interference in DSPN Spread-Spectrum Communications" by F. Amoroso, at pages 1117 to 1123 in IEEE Transactions on Communications, Volume COM-31, No. 10, October 1983, which describes a 2-bit analog to digital converter in which samples having a magnitude that exceeds a predetermined maximum threshold value (i.e. positive and negative magnitude thresholds To-$\Delta$ and $T_o+\Delta$ where $T_o$ is the sign threshold on the input sample value axis) are given a fixed output value, called a weight, which is +R or -R depending on the sign of the sample and samples having a magnitude that is smaller than the predetermined maximum threshold value are given the output value +1 or -1, depending on the sign of the sample. The converter is adapted to vary the value of $\Delta$ on an averaging basis so that the threshold is exceeded with the statistical frequency required to reject continuous wave (CW) interference. Graham, Ould, and Van Wechel also describe this technique in their paper mentioned hereinbefore. F. Amoroso also points out in his paper that, whilst it is the setting of R to a value much greater than unity that enables CW interference to be rejected, the analog to digital conversion gain in Gaussian noise depends upon all of the possible digital outputs, and shows theoretically that, with the value 1 for samples below the maximum threshold, and 35 percent of chips above this threshold, the optimum value of R is 3.5. F. Amoroso further mentions that samples falling below the magnitude thresholds are given unity weight in the correlator, while samples exceeding the magnitude thresholds are given weight R.

New applications of the GPS system have identified the need for a GPS receiver having a signal processor implemented on a very large scale integrated (VLSI) circuit. In order to accomplish this level of integration, the signal processor has to be designed with minimum circuitry to facilitate implementing it on a VLSI circuit.

The present invention therefore lies in the field of digital signal processing for both radar and communications using phase code modulation.

According to the present invention, a GPS receiver of the kind defined hereinbefore at the beginning is characterised in that each correlator means includes means for weighting the samples in dependence upon their magnitudes, and each weighting means includes means for generating in-phase and quadrature-phase weight selecting signals derived from the signs and magnitudes of the samples and respectively representative of whether the analog magnitudes of the in-phase and quadrature-phase samples are outside a predetermined threshold, and an in-phase weight selector controlled by the in-phase weight selecting signal and a quadrature weight selector controlled by the quadrature weight selecting signal, each weight selector being adapted to be controlled to apply in the correlator means a predetermined maximum weighting factor when the respective weight selecting signal indicates a sample analog magnitude outside the predetermined threshold, and to apply in the correlator means a weighting factor that is a quantized function of the sample analog magnitude when the respective weight selecting signal indicates a sample analog magnitude inside the predetermined threshold.

Preferred embodiments of this invention provide: a GPS receiver to perform N-bit correlation of a received PN-code modulated carrier with sign and magnitude input weighting;

a GPS receiver which performs N-bit correlation of a received PN-code modulated carrier using minimum circuits and interconnections to facilitate very large scale integrated (VLSI) circuit implementation;

a PN-code correlation apparatus for a GPS receiver which generates a PN-code reference to provide both an in-phase reference (IREF) signal and quadrature-phase reference (QREF) signal to enable performing either IF sampling or baseband sampling of the received PN-code modulated carrier;

a multi-channel signal processor wherein each channel comprises a sign and magnitude input weighted correlator for correlating BPSK pseudo-random noise codes.

More particularly, a preferred embodiment of the Global Positioning System (GPS) receiver comprises a GPS receiver front end for performing sampling of a received PN-code modulated carrier to generate in-phase (I) and quadrature-phase (Q) samples, a signal processor coupled to outputs of the receiver front end for removing a doppler frequency and PN-code modulation from the modulated carrier, the signal processor comprises a plurality of channels, each of the channels including a correlator means, having sign and magnitude input weighting, for correlating the I and Q samples with in-phase (IREF) and quadrature-phase (QREF) components of an internally generated PN-code reference, the correlator means controlled in response to a weighting select signal, and a GPS processor coupled to the signal processor for processing the correlated I and Q samples to determine the phase of the carrier signals, to provide multi-channel control signals to the signal processor and to estimate a pseudo-range and a pseudo-range rate. The GPS front end receiver comprises either IF sampling or baseband sampling for generating said I and Q samples. For baseband sampling the correlator comprises means for correlating the I and Q samples with only the IREF component of the internally generated PN-code reference. The sign and magnitude input weighting of the correlator comprises register means for storing an R factor weighting input, multiplexor means coupled to the register means for selecting between weighted inside crossings of the samples and weighted outside crossings of the samples in accordance with the weighting select signal, and logic means coupled to the multiplexor for generating the weighting select signal in accordance with sign and magnitude inputs of the samples to the logic means.

The preferred embodiment incorporates a correlation apparatus comprising means for removing received carrier doppler from in-phase (I) and quadrature-phase (Q) samples of a received pseudo-random noise (PN) code modulated carrier signal, means coupled to the received carrier doppler removing means for generating a PN-code reference which is a replica of the received PN-code, the PN-code reference having an in-phase (IREF) component and a quadrature-phase (QREF) component, and means, coupled to the carrier doppler removing means and the PN-code reference replica generating means, for correlating the I and Q samples with the IREF and QREF components respectively of the replicated PN-code. The correlating means comprises sign and magnitude input weighting means of the I and Q samples. The input weighting applies an R weighting factor to the samples thereby providing the weighted samples with additional A/D conversion gain for correlation, adder control means coupled to the input weighting means for determining whether each of the weighted samples is added to or subtracted from an accumulated value of the weighted samples in accordance with a correlator control signal, means for generating the correlator control signal by comparing a sign of the sample to the PN-code reference signal, and integrator means coupled to the adder control means and the correlator control signal generating means for accumulating and integrating the weighted samples over a correlation time interval. The R factor weighting input for outside crossings is variable under programmed control or may be a constant for a specific correlation interval $(T_{cj})$.

In performing PN-code correlation, the preferred Global Positioning System receiver carries out the steps of sampling a received PN-code modulated carrier in the GPS receiver front end to generate in-phase (I) and quadrature-phase (Q) samples, removing a doppler frequency and PN-code modulation from the modulated carrier in the signal processor, the signal processor comprises a plurality of channels, each of the channels including a correlator means

EP 0 460 862 B1

having sign and magnitude input weighting, correlating in the correlator means the weighted I and Q samples with in-phase (IREF) and a quadrature-phase (QREF) components of an internally generated PN-code reference, and processing the correlated I and Q samples in a processor means to determine the phase of the carrier, to provide multi-channel control signals to the signal processor, and to estimate a pseudo-range and a pseudo-range rate. The step of sampling in the GPS receiver front end comprises the step of performing IF sampling or baseband sampling for generating said I and Q samples. The step of performing baseband sampling further comprises the step of correlating the weighted I and Q samples with only the IREF component of the internally generated PN-code reference.

Brief Description of the Drawings

Other and further features of the invention will become apparent in connection with the accompanying drawings wherein:

FIG. 1 is a block diagram of a Global Positioning System receiver having an X-channel signal processor 16 comprising the invention;
FIG. 2 is a block diagram of an X-channel signal processor comprising the multi-Y-tap correlator/integrator invention;
FIG. 3 is a block diagram of one channel of an X-channel signal processor showing the I multi-Y-tap correlator/integrator and Q multi-Y-tap correlator/ integrator;
FIG. 4 is a timing diagram for the invention showing I samples and Q samples alignment with a reference code;
FIG. 5 is a logic block diagram of the I and Q code reference generator shown in FIG. 3;
FIG. 6 is a functional block diagram of an I or Q correlator/integrator tap having I or Q input weighting for a 2-bit A/D;
FIG. 7 is a functional block diagram of an I or Q correlator/integrator tap having input weighting for an N-bit A/D;
FIG. 8 is a block diagram of the invention comprising an I eight-tap correlator/integrator;
FIG 9 is a block diagram of the invention comprising a Q eight-tap correlator/integrator;
FIG. 10 is a logic block diagram of the I or Q correlator coupled to the integrator;
FIG. 11A is a logic diagram of the integrator showing overflow control for the I or Q integrator;
FIG. 11B is a timing diagram for the integrator of the multi-Y-tap correlator/integrator showing the time relationship of 2FSXN, a 1 ms correlation interval ($T_{cj}$), and the delayed correlation interval timing pulses $T_{cj}$DXN(0) for tap 0 and $T_{cj}$DXN(1) for tap 1;
FIG. 12 is a logic diagram of one I or Q muilti-Y-tap integrator overflow control coupled to an output register which is shown in FIG. 11A as the output register/overflow control;
FIG. 13 shows the I or Q correlator 16-bit output levels for one I or Q Y-tap.

Description of the Preferred Embodiment

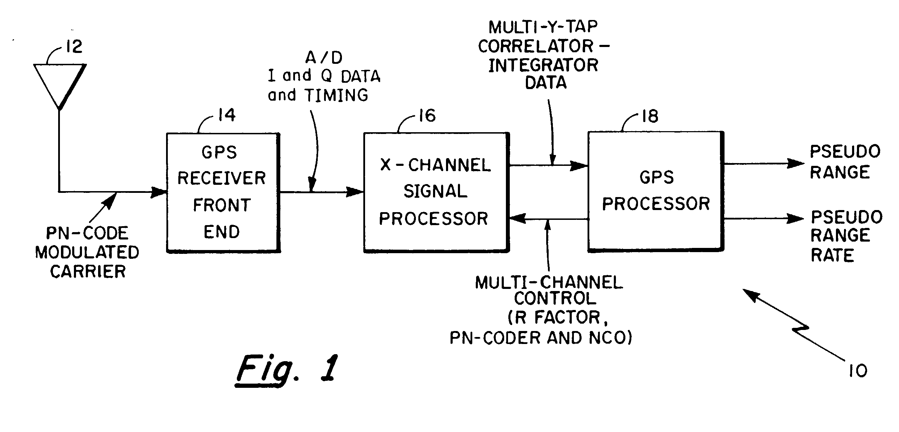

Referring now to FIG. 1, there is shown a block diagram of a Global Positioning System (GPS) receiver 10. The GPS receiver provides acquisition and tracking of received Binary Phase Shift Keying (BPSK) modulated carrier signals. The GPS receiver 10 comprises an antenna 12 for receiving BPSK modulated carrier signals and the antenna 12 is coupled to a GPS receiver front end (RFE) 14 for performing RF/IF processing with analog-to-digital (A/D) conversion in order to generate in-phase (I) and quadrature-phase (Q) signal outputs. The GPS RFE 14 also includes a receiver frequency standard oscillator and timing synthesizer (not shown but known to one skilled in the art) for generating the GPS receiver 10 clocks and timing pulses. The GPS RFE 14 outputs are coupled to an X-channel signal processor 16 which is used to acquire and track a plurality of satellite vehicle transmitters. The maximum number of channels is twelve which is determined by the number of satellites in view at one time and the minimum number is five with four required for estimating latitude, longitude, altitude, and time. The fifth is required to search the sky for determining the optimum set of four satellites to be used for estimating latitude, longitude, altitude and time. The X-channel signal processor 16 removes the BPSK pseudo-random noise code modulated on the received RF carrier. The X-channel signal processor 16 produces correlator/integrator data which is coupled to a GPS processor 18 and the GPS processor 18 generates an R factor, PN-coder and NCO control signals which are fed back to the X-channel signal processor 16 to enable the X-channel signal processor 16 to track the received RF carrier to remove the doppler frequency and PN-code modulation in each signal processor channel. The A/D I and Q data from the GPS RFE 14 is coupled to a phase rotator in each channel of the X-channel signal processor 16 for removal of received signal carrier doppler. The GPS processor 18 also estimates the pseudo range and pseudo range rate of a GPS satellite.

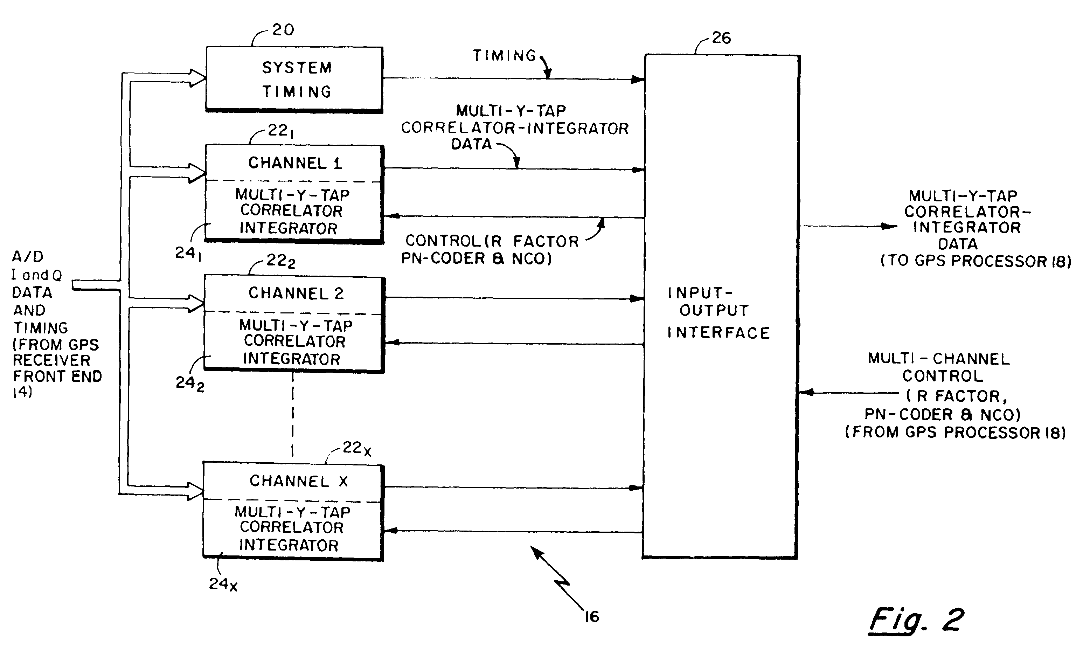

Referring now to FIG. 2, a block diagram of the X-channel signal processor 16 is shown comprising system timing 20 means and a plurality of channels $22_1$ to $22_X$, each channel comprising an improved multi-Y-tap correlator/integrator $24_1$ to $24_X$. An input-output interface 26 provides a serial output for the multi-Y-tap correlator/integrator data which is fed to the GPS processor 18 and such interface 26 receives via a serial input an R factor control, PN-coder control

5

and NCO control signals for each channel from GPS processor 18.

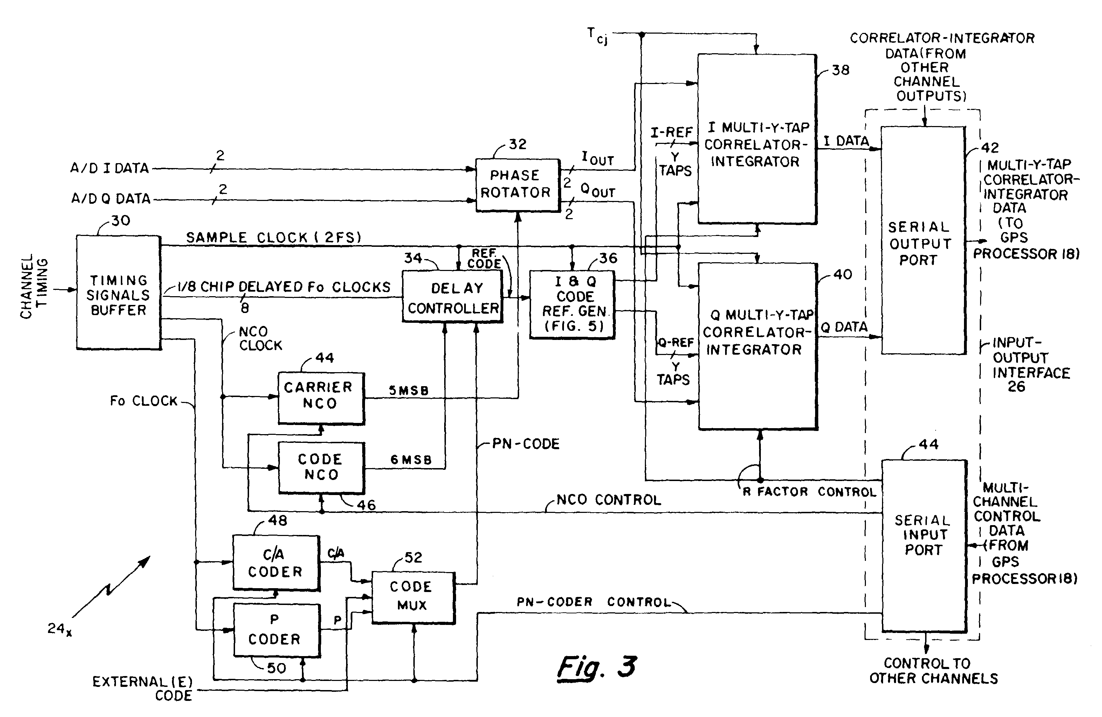

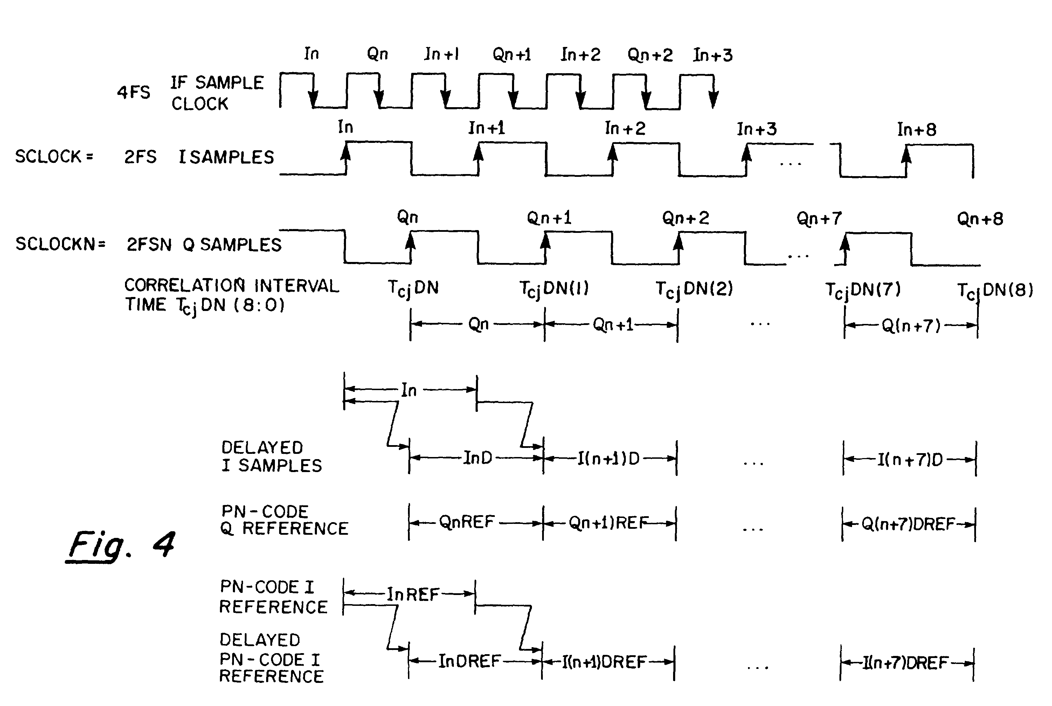

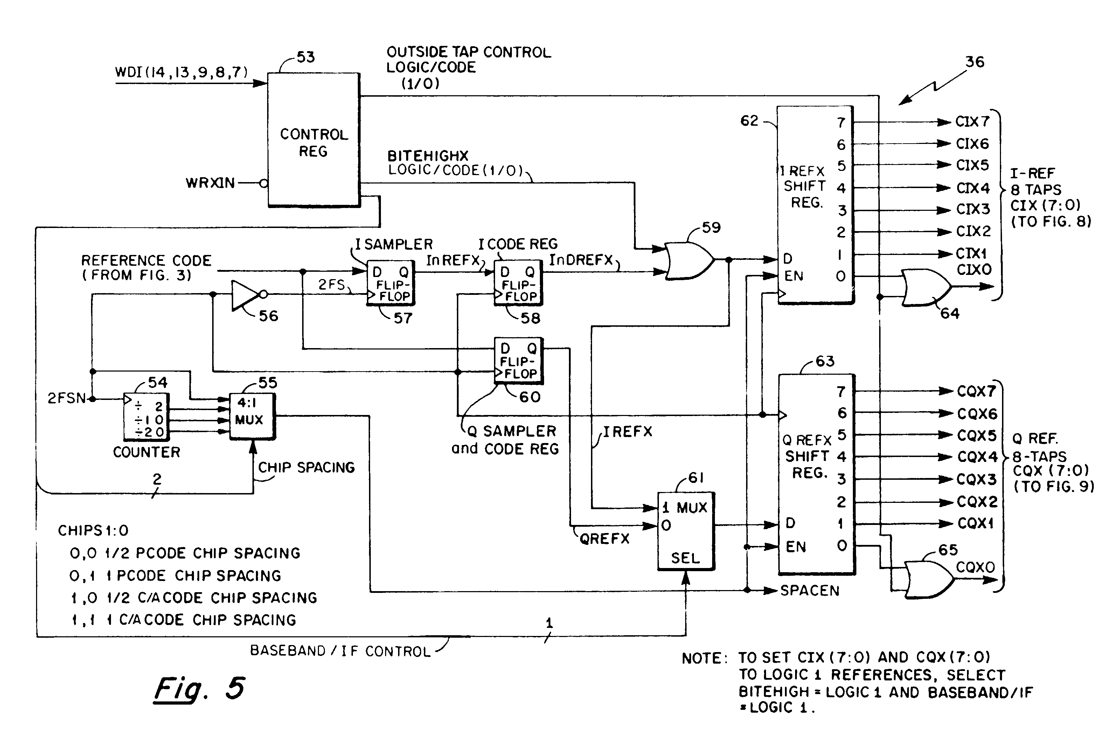

Referring now to FIG. 3, a block diagram of one channel of the X-channel signal processor 16 is shown having a multi-Y-tap correlator integrator $24_X$ comprising an I multi-Y-tap correlator/integrator 38 and a Q multi-Y-tap correlator/integrator 40. The channel 22 receives timing signals which are coupled to a timing signals buffer 30 for distribution within the channel, and the channel receives I and Q data signals from the GPS RFE 14. The A/D I and Q data signals are coupled to a phase rotator 32 for removal of received signal carrier doppler. The phase rotator 32 output in the channel 22 is coupled to the Y-tap correlator/integrator to remove the PN-code modulation for code and carrier tracking in the GPS processor 18. The $I_{OUT}$ and $Q_{OUT}$ from the phase rotator 32 are fed to the I multi-Y-tap correlator/integrator 38 and the Q multi-Y-tap correlator/ integrator 40 respectively where the I signal and Q signal correlations strip-off the PN-code modulation for extended range tracking in each channel. A numerical controlled oscillator (NCO) clock signal from the timing signals buffer 30 is coupled to a carrier NCO 44 and a code NCO 46. The carrier NCO 44 produces five bits of the most significant carrier NCO bits of the instantaneous phase output (where each of the bits starting with the most significant bit represents 180°, 90°, 45°, 37.5° and 22.5°) and these 5 MSBs are coupled to the phase rotator 32 for phase rotating the received I and Q data A/D samples. The limited number of carrier NCO bits used for the phase rotator angle does not degrade the phase resolution because the full precision estimates are maintained in the GPS processor 18 shown in FIG. 1. The correlated I and Q data from the I multi-Y-tap correlator/integrator 38 and the Q multi-Y-tap correlator/ integrator 40 in the channel is transmitted to the GPS processor 18 at a one millisecond correlation interval time ($T_{cj}$) over a serial output port 42. The code NCO 46 produces 6 bits of the most significant code NCO bits of the instantaneous integer and fractional code chips of delay or range and the most significant bit is 4 P-code (10.23 MHz) chips of delay. The 6 MSBs (representing 4, 2, 1, 1/2, 1/4 and 1/8 P-code chips of delay) are coupled to the delay controller 34. The limited number of code NCO bits used for the delay controller 34 does not degrade fractional chips of delay or range resolution because, as previously noted, the full precision estimates are maintained in the GPS processor 18 shown in FIG. 1. The 6 MSBs of the code NCO 46 are coupled to a delay controller 34 to keep the received I and Q signals centered within a particular correlator/integrator tap. A 2FS sample clock and eight 1/8 chip delayed Fo clocks are coupled to the delay controller 34 along with a signal from the code multiplexor (MUX) 52. The output of the delay controller 34 is a reference code which is coupled to I and Q code reference generator 36. The I and Q code reference generator 36 generates Y I-reference code replica signals which are coupled to the I multi-Y-tap correlator/integrator 38 and also generates Y Q-reference code replica signals which are coupled to the Q multi-Y-tap correlator/integrator 40 where Y is the number of taps in the multi-Y-tap correlator/integrators 38, 40.

Still referring to FIG. 3, the Fo clock, which is the local 10.23 MHz reference, is coupled from the timing signals buffer 30 to a C/A coder 48 and P coder 50. The C/A coder 48 generates a C/A code replica and the P-coder 50 generates a P code replica. The C/A coder 48 and the P coder 50 generate a replica of the PN-code modulated on the received RF carrier signal. The delayed code replica is aligned with the received PN-code A/D samples by the delay controller 34 which produces the REF CODE signal. The C/A and P-codes are coupled to the code multiplexor (MUX) 52 which selects the transfer of such codes, and the output of code MUX 52 is a PN-code which is fed to the delay controller 34 in accordance with a coder control signal received from a serial input port 44. A PN-code chip is the time or period defined by the PN-code frequency (1.023 MHz or 10.23 MHz for the GPS receiver 10). The I and Q code reference tap spacing is either 1/2 or 1 PN-code chip spacing, where the PN-codes are C/A, P or E. The GPS C/A code is 1.023 MHz and P-code frequency is equal to the external (E) code frequency 10.23 MHz. The input port 44 receives control data from the GPS processor 18 for R factor, C/A coder, P-coder and NCO control. The R factor control data is coupled to the I multi-Y-tap correlator/ integrator 38 and the Q multi-Y-tap correlator/integrator 40. The coder control data is coupled to the C/A coder 48, P-coder 50 and a code multiplexor (MUX) 52. This code control data from the input port 44 provides control for acquisition, code and carrier tracking and when applicable built-in-test capability. Such control data is received from the GPS processor 18 at multiples of a one-millisecond correlation interval for the X-channel signal processor 16 to acquire and track up to X satellites on C/A, P, or E-code where E-code is an external replica of another code transmitted.

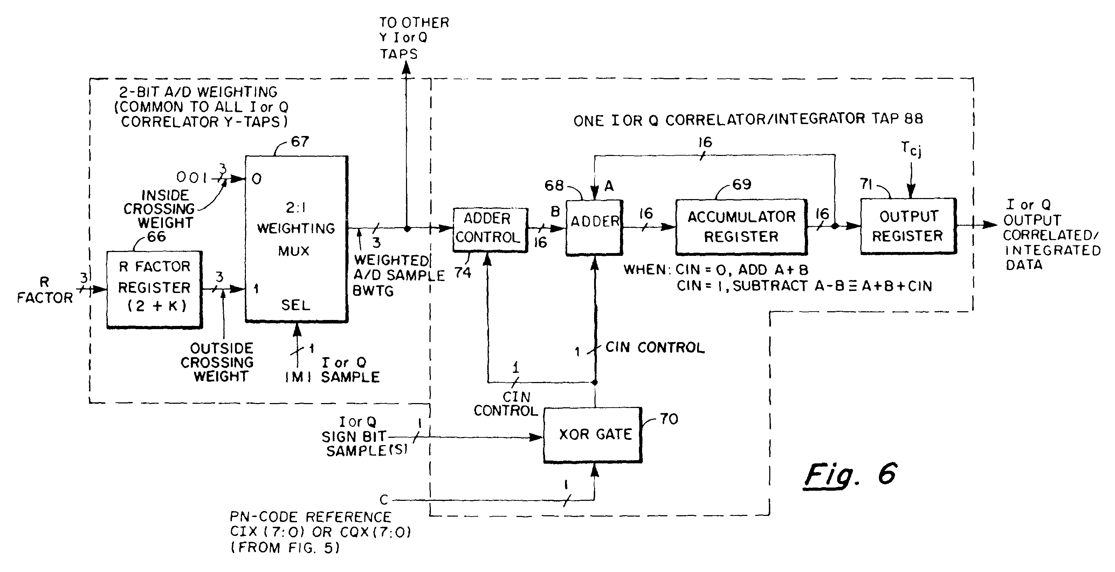

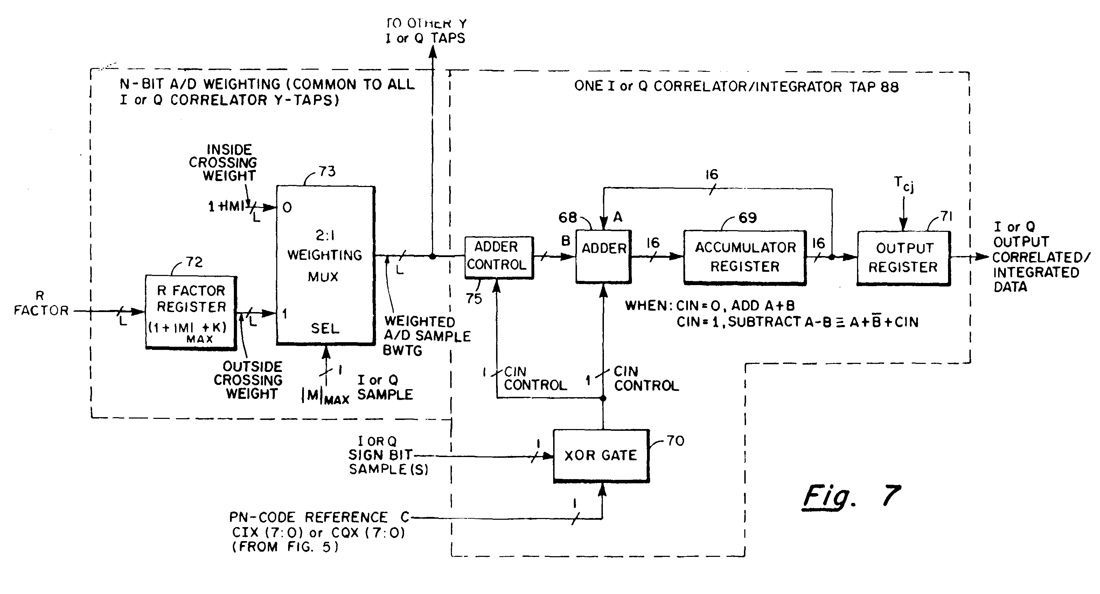

Referring now to FIGS. 4 and 5, FIG. 5 is a block diagram of the I and Q code reference generator 36. The timing relationship of the I-reference and Q-reference code replica signals to the clock signals (4FS and 2FS) are shown in FIG. 4. The reference code (REF. CODE) signal shown in FIG. 3 and 5 is either for baseband A/D sampling where I and Q samples are taken at the same instant in time or for IF sampling used in the present embodiment where the I and Q samples are sequenced in time through an in-phase A/D converter. IF sampling uses only an in-phase analog-to-digital converter to sample the IF signal at a number of quarter cycle intervals as described in our European patent application no. 90302335.6, publication no. 0386985 entitled "Spread Spectrum Signal Detector".

As shown in FIG. 4, every other in-phase sample is followed by a quadrature-phase sample. The I and Q A/D samples are aligned in time for processing I and Q samples together. FIG. 4 shows such alignment for the nth A/D sample $I_n$ and $Q_n$. The $I_n$ sample delayed is $I_nD$ and is aligned in time with the $Q_n$ sample. Because the IF samples are sequenced in time, the PN-code reference must also be sequenced in time for alignment with the I and Q A/D sample times for I and Q PN-code correlation. The C/A coder 48 or P-coder 50 generate a replica of the PN-code modulated on the received RF carrier signal. The code replica generated by the delay control 34 in FIG. 3 is the REF. CODE as noted previously. The six most significant code NCO bits keep the received PN-code modulated carrier signal centered in the selected I or Q correlator tap. The replicated PN-code or the REF. CODE is aligned in time with the I and Q samples as shown in FIGS. 4. The $I_n$REF signal is delayed similarly as the $I_n$ A/D sample is delayed in order to line up $I_n$DREF with the $Q_n$REF signal. This delay is accomplished as shown in FIG. 5 by the D flip-flops 57, 58, 60 which are clocked by 2FSN or 2FS where 2FS is generated by an inverter 56.

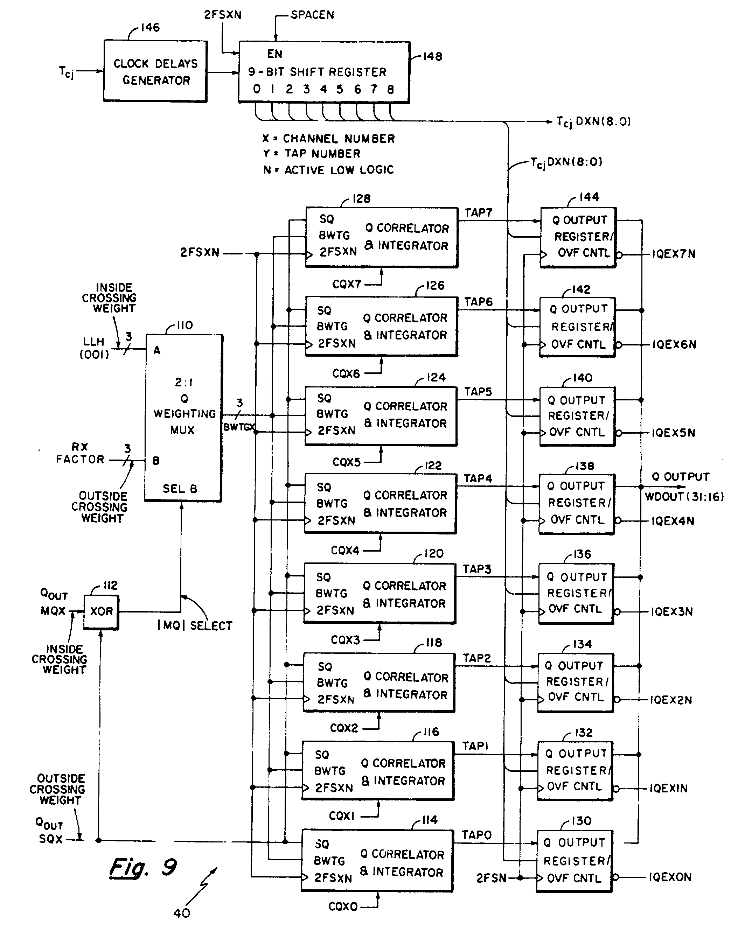

Referring again to FIGS. 3 and 4, the leading edge of the delayed correlation interval timing pulses $T_{cj}$DN(8:0) are shown. A correlation interval pulse ($T_{cj}$) is delayed to account for the signal processing delays. The delay accounts for the number of clock cycles it takes to propagate the P, E or C/A codes through the signal processor code MUX 52, delay controller 34 and I and Q code reference generator 36. The matched shift register delays for PN-code chip spacing are generated by the 9-bit shift register 148 (shown in FIG. 9) to produce the $T_{cj}$DN(8:0) timing as shown in FIG. 4.

Referring now to FIGS. 4 and 5, the IREFX signal at the output of OR gate 59 and the QREFX signal at the output of D-flip-flop 60 are coupled to the MUX 61 for selecting the QREFX shift register 63 via the D input. The IREFX shift register 62 generates the IREF signals (CIX7-CIX0) for 8 taps in the present embodiment and the QREFX shift register 63 generates the QREF signals (CQX7-CQX0) for 8 taps in the present embodiment. The IREFX shift register 62 and QREFX shift register 63 generate correlator tap spacing CIX(7:0) and CQX(7:0) at either 1/2 or 1 PN-code chip spacing, where the PN-codes are the C/A code at 1.023MH or the P-code at 10.23MH. The reference code timing for CIX(7:0) and CQX(7:0) is listed in Table 1. The 4:1 MUX 55 which is coupled to the outputs of counter 54 selects either the 2FSN clock or the 2FSN clock divided by 2, 10 or 20 for the CIX(7:0) and CQX(7:0) correlator tap spacing. The output (SPACEN) of the 4:1 MUX 55 is coupled to enable inputs of the IREFX and QREFX shift registers 62, 63 in order to control the 1/2 or 1 PN-code chip spacing for the CIX(7:0) and CQX(7:0) correlator taps. A control register 53 receives a 5-bit control word WDI(14,13,9,8,7) and generates five control signals comprising outside tap control logic/code (1/0), BITEHIGHX-logic/code (1/0), chip-spacing (1:0) and baseband/IF control. The outside tap control logic/code signal is coupled to the inputs of OR gates 64 and 65 for a code reference or a logic one reference for only the outside correlator taps CIXO and CQXO for noise and interference evaluation or built-in testing. The BITEHIGHX-logic/code signal is coupled to an input of OR-gate 59 for a code reference if logic 0 or a logic 1 reference for all

### TABLE 1   CORRELATOR PN-CODE CHIP SPACING

| CLOCK TIMING | P-CODE CHIP SPACING | CORRELATOR TAP NUMBER CIX(7:0) or CQX(7:0) | | | |
|---|---|---|---|---|---|
| 2FSN | 1/2 | \|0\|1\|2\|3\|4\|5\|6\|7\| | | | |
| 2FSN/2 | 1 | \| 0 \| 1 \| 2 \| 3 \| 4 \| 5 \| 6 \| 7 \| | | | |
| 2FSN/10 | 5 | \|          0          \|          1          \|          2 | | | |
| 2FSN/20 | 10 | \|                    0                    \|                    1 | | | |

NOTE:   1/2 C/A code chip spacing equals 5 P-code chips.

1 C/A code chip spacing equals 10 P-code chips.

The PN-code comprises the GPS P-code and C/A code

chip spacing.

the correlator taps CIX(7:0) and CQX(7:0) to provide built-in testing, noise or interference evaluation. The chip spacing (1:0) signals are coupled to the 4:1 MUX 55 for selecting the IREFX and QREFX correlator tap spacings. The baseband/ IF control signal is coupled to the select input of MUX 61 for IF sampling with an IREFX and QREFX or for baseband sampling using the IREFX for both I and Q correlator taps. There are jamming and interference signals that can be

7

defeated by non-linear processing techniques. One embodiment of these techniques is to use the IREFX for both the I and Q correlator with IF sampling taps by controlling the MUX 61 with the baseband/IF control signal. This embodiment also allows a multi-channel signal processor to be used for both IF sampling and baseband sampling analog-to-digital A/D converters. Baseband sampling uses A/D converters for both the in-phase samples and quadrature-phase samples, taking both in-phase and quadrature-phase samples at the same time.

Referring again to FIG. 3, the phase rotated samples $I_{out}$ and $q_{out}$ from the phase rotator 32 are correlated in the multi-Y-tap correlator/integrator 38, 40 with either the C/A, P or E-code Y I-references and Y Q-references. The PN-code reference in a multi-Y-tap correlator has tap spacings at approximately 1/2 or 1 PN-code chip intervals. The received samples spaced T seconds apart are correlated with the PN-code reference C(jT) over the J sample correlation interval $T_{cj}$ where each code and A/D sample time is jT. The function performed by each correlator/integrator tap is:

$$I_{TAP} = \sum_{j=0}^{J-1} S_I(jT) \oplus C(jT) \; [1+|M_I(jT)|+K]$$

$$Q_{TAP} = \sum_{j=0}^{J-1} S_Q(jT) \oplus C(jT) \; [1+|M_Q(jT)|+K]$$

where:

| | |
|---|---|
| T = | 1/(2Fs) I and Q sample period |
| $T_{cj}$ = | JT Correlation Interval |
| S = | A/D Sign Bit of I or Q sample |
| C = | PN-Code Reference = CIX(7:0) or CQX(7:0) |
| C(jT) = | One of the corrleator taps CIX(7:0) or CQX(7:0) |
| $\oplus$ = | Exclusive-Or Symbol |
| IMI = | Magnitude of the I or Q Sample Magnitude Bits |
| IMI | < $|MI|_{MAX}$ then K = 0 |
| IMI= | $|MI|_{MAX}$ then K = value of K |
| R Factor = | $1+|MI|_{MAX}+K$ |

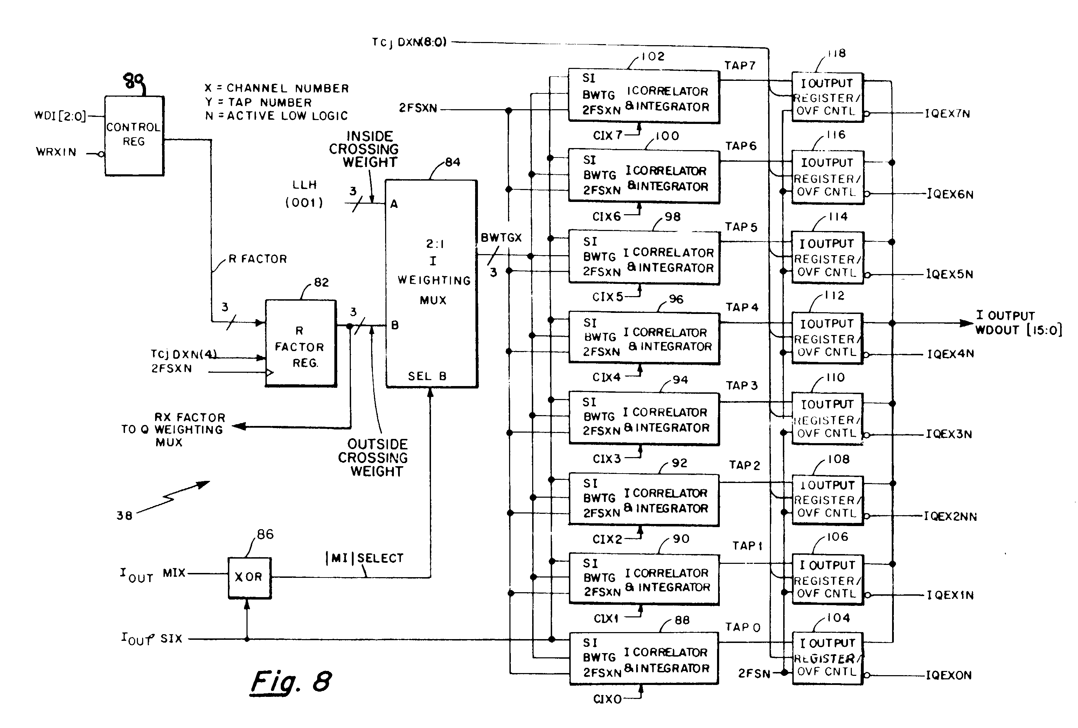

Referring now to FIG. 6 6 and FIG. 7, FIG. 6 shows a functional block diagram of an I or Q correlator/integrator tap (such as the tap 88 of Fig. 8) with input weighting for the data from a 2-bit A/D in GPS RFE 14 (FIG. 1). Fig. 7 is a functional block diagram of an I or Q correlator/integrator tap with input weighting for the data from an N-bit A/D in GPS RFE 14. The A/D I and Q data from the GPS RFE 14 is from an adaptive analog-to-digital (A/D) converter (described in European Patent Application No. 90302335.6 referenced hereinbefore) which detects the received RF carrier zero-crossings using a plus and minus A/D sign bit. A/D magnitude bits are used to defeat jamming and interference. The correlator weighting of the A/D bits provides A/D conversion gain against jamming and interference. Binary weighting of the A/D magnitude bits is for a linear A/D. Non-linear weighting for the most significant magnitude is for an adaptive A/D converter. The R factor for both linear and adaptive A/D converters is the weight applied to the most significant magnitude. The most significant magnitude weighted by the R factor is considered an outside crossing when the voltage level of the input to the A/D converter exceeds the most significant magnitude threshold. All other magnitude weights are considered inside crossings. The I or Q correlator/integrator tap 88 in FIGS. 6 and 7 respectively comprise an adder 68 which is coupled to an accumulator register 69. The output of accumulator register 69 is coupled to an input of the output register 71 and it is also fed back to an A input of adder 68. The B input to adder 68 receives a 16-bit word from an adder control 74 (FIG. 6) or adder control 75 (FIG. 7). The adder control 74 (FIG. 6) receives a 3-bit weighted A/D sample (BWTG) from a single weighting network which is common to all I or Q correlator/integrator Y-taps. The adder control 75 (FIG. 7) receives an L-bit weighted A/D sample (BWTG) from a single weighting network which is common to all I or Q correlator/integrator Y-taps. The correlator CIN signal generated by XOR-gate 70 is also coupled to adder control 74 (FIG. 6) and 75 (FIG. 7) for determining the B input to adder 68. The adder 68 performs an add or subtract function depending on the correlation CIN control signal generated by an exclusive-OR (XOR) gate 70. The inputs to the correlator XOR gate 70 are an I or Q sign bit sample (S) and a PN-code reference replica (C). An R factor register 66 (FIG. 6) and 72 (FIG. 7) stores the R factor value which may be a fixed R factor or the R factor may be downloaded from the GPS processor 18. In the 2-bit A/D weighting embodiment (FIG. 6) a 3-bit output of the R factor register 66 is coupled to the outside crossing input of a 2:1 weighting MUX 67 and a second input of MUX 67 is 1+IMI for inside crossings. With the 2-bit A/D when the IMI equals zero, the connection is to a logic level (001) for the inside crossings. The R factor is determined by 1 for the sign bit, the magnitude of $IMI_{MAX}$ and K: hence, the R Factor equals $1+IMI_{MAX}+K$. For the 2-bit A/D $IMI_{MAX}=1$ and the R factor equals 2+K for outside crossings. In the N-bit A/D weighting (FIG. 7) comprising a sign bit and N-1 magnitude bits, the magnitude is the one's compliment of the magnitude bits when the sign bit is negative. In the present embodiment of a 2-bit A/D input (FIG. 6) comprising a sign bit and a magnitude bit, the magnitude is the one's compliment of the magnitude bit when the sign bit is negative. The select (SEL) input of MUX 67 is controlled by the maximum value for the magnitude IMI of the A/D sample ($I_{out}$ or $Q_{out}$ in FIG. 3), generated by the exclusive-OR (XOR) of the sign bit S with the magnitude bit M as shown in Table 2.

Each correlator/integrator tap 88 correlates the I or Q sign bit sample (S) with the PN-code reference replica (C) and accumulates an I or Q weighted A/D sample by adding or subtracting the weighted A/D sample from the integrated value in the accumulator register 69. The weighted A/D sample (BWTG) having 3-bits is added in adder 68 when the sign bit (S) correlation matches the PN-code reference replica (C) and is subtracted in adder 68 when there is a correlation mismatch. The

TABLE 2

| A/D INPUT SAMPLE WEIGHTING CONTROL | | | | |
|---|---|---|---|---|
| S | M | S XOR M IMI | A/D INPUT Sample Weight | Crossing |
| 0 | 1 | 1 | R Factor | Outside |
| 0 | 0 | 0 | 1 | Inside |
| 1 | 1 | 0 | 1 | Inside |
| 1 | 0 | 1 | R Factor | Outside |

PN-code correlator/integrator tap 88 arithmetic is listed in Table 7. The N-bit A/D weighting is shown in Table 3 and 4. The correlator weights are 1+IMI for the linear N-bit A/D converter as listed in Table 3. The adaptive A/D scaling or weighting of the bits is binary except for the outside crossings of the most significant magnitude bit weighted by R. The correlator weights for an adaptive N-bit A/D converter are 1+IMI+K as listed in Table 4. Except for the most significant magnitude bit, the samples that exceed the outside thresholds are weighted by $1+IMI_{MAX}+K$. With a one bit A/D there are no outside thresholds, the magnitude of M (IMI) equals zero and the 1-bit correlator weight is times one for the sign bit. The linear/adaptive A/D weighting for any size A/D is listed in Table 5. A 3-bit A/D used to show an example of the weighting values is listed in Table 6. The one's compliment input weighting using the magnitude provides a unique decode for detecting outside crossings. The $IMI_{MAX}$ decode for outside crossings is when all the magnitude bits equal a binary or logic one. The one's compliment input weighting uses the same weights for positive and negative numbers, +1 to +R as listed in Table 6. This property of the weights provides a unique correlator independent of the number of A/D bits. The correlation is the "exclusive-OR"

TABLE 3

| LINEAR BINARY WEIGHTED A/D MAGNITUDE WEIGHTS (1+IMI) | | | |
|---|---|---|---|
| N | S⊕C | $S\ M_0M_1M_2........M_{N-2}$ | IMIMAX |
| 1 | ±1 | 1 | 0 |
| 2 | ±1 | 1+1 | 1 |
| 3 | ±1 | 1+1+2 | 3 |
| 4 | ±1 | 1+1+2+4 | 7 |
| • | • | • | • |
| • | • | • | • |
| • | • | • | • |
| N | ±1 | $1+1+2+4........2^{N-2}$ | $2^{N-1}-1$ |
| R FACTOR = $1 + IMI_{MAX} = 2^{N-1}$ | | | |

| BINARY WTGS | ±1 | $2^{N-2}$ | ... | $2^2$ | $2^1$ | $2^0$ |
|---|---|---|---|---|---|---|
| BIT NUMBER | N-1 | N-2 | ... | 2 | 1 | 0 |
| N A/D BITS | S | $M_{N-2}$ | ... | $M_2$ | $M_1$ | $M_0$ |

Where:

$S$ = A/D sign bit
$M$ = A/D magnitude bits

TABLE 4

| ADAPTIVE A/D MAGNITUDE WEIGHTS (1+IMI+K) | | | |
|---|---|---|---|
| N | S⊕C | S $M_0 M_1 M_2 ........ M_{N-2}$ | $IMI_{MAX}$ |
| 1 | ±1 | 1 | 0 |
| 2 | ±1 | 1+1+K | 1 |
| 3 | ±1 | 1+1+2+K | 3 |
| 4 | ±1 | 1+1+2+4 | 7 |
| • | • | • | • |
| • | • | • | • |
| • | • | • | • |
| N | ±1 | $1+1+2+4.......2^{N-2}+K$ | $2^{N-1}-1$ |
| R FACTOR = $1+IMI_{MAX}+K = 2^{N-1}+K$ | | | |

Where,

$IMI$ = Magnitude of the I or Q Sample Magnitude Bits
$IMI < IMI_{MAX}$ then $K = 0$
$IMI = IMI_{MAX}$ then $K$ = value of K

| BINARY WTGS | ±1 | $2^{N-2} ... 2^2$ | $2^1$ | $2^0$ |
|---|---|---|---|---|
| BIT NUMBER | N-1 | N-2 ... 2 | 1 | 0 |
| N A/D BITS | S | $M_{N-2} ... M_2$ | $M_1$ | $M_0$ |

TABLE 5

| LINEAR/ADAPTIVE A/D WEIGHTING | | | |
|---|---|---|---|
| 1 BIT A/D | 2 BIT A/D | 3 BIT A/D | N BIT A/D |
| | | | +R |
| | | +R | • |
| | | +3 | • |
| | +R | +2 | +2 |
| +1 | +1 | +1 | +1 |
| -1 | -1 | -1 | -1 |
| | -R | -2 | -2 |
| | | -3 | • |
| | | -R | • |
| | | | -R |
| For ADAPTIVE A/D: $R=2^{N-1}+K$ | | | |
| For LINEAR A/D: $K=0$ & $R=2^{N-1}$ | | | |

TABLE 6

| 3-BIT A/D EXAMPLE | | | | | |
|---|---|---|---|---|---|
| One's Compliment Number | S $M_1$ $M_0$ | Two's Compliment A/D Weighting | One's Comp. $M_1$ $M_0$ IMI | One's Comp. A/D Weighting 1+IMI+K | Crossing |
| +3 | 0 1 1 | +R | 1 1 +3 | +R | Outside |
| +2 | 0 1 0 | +3 | 1 0 +2 | +3 | Inside |
| +1 | 0 0 1 | +2 | 0 1 +1 | +2 | Inside |
| +0 | 0 0 0 | +1 | 0 0 +0 | +1 | Inside |
| 1 | 1 1 1 | -1 | 0 0 +0 | +1 | Inside |
| -2 | 1 1 0 | -2 | 0 1 +1 | +2 | Inside |
| -3 | 1 0 1 | -3 | 1 0 +2 | +3 | Inside |
| -4 | 1 0 0 | -R | 1 1 +3 | +R | Outside |
| R Factor Adaptive A/D: $R=2^{N-1}+K=4+K$ | | | | | |
| R Factor Linear A/D: $K=0$ & $R=2^{N-1}=4$ | | | | | |

of the A/D sign bit (S) with the PN-code reference replica (C) and adder control 74, 75 using the correlator output as the carry-in (CIN). The more complicated two's compliment input weighting numbers are both positive and negative, +1 to +R and -1 to -R as listed in Table 6. Now a more complex correlator and decoding structure are required to select the A/D sample weight for a correlation match or mismatch. The "exclusive-OR" of the sign bit with the PN-code reference replica determines if the A/D input weighted sample is a match or mismatch and if the magnitude of the input sample weighted is to be added or subtracted from the accumulated value in the integrator, not the sign bit of the A/D sample.

Still referring to FIG. 6 and 7, one I or Q correlator/integrator tap 88 with sign and magnitude (one's compliment) input weighting and control is shown in FIG. 6 for the present GPS receiver 10 having a 2-bit adaptive A/D in GPS RFE 14, and an I or Q correlator/integrator tap 88 is also shown in FIG. 7 for the general case of an N-bit adaptive A/D in GPS RFE 14. As noted above, the single R factor register 66, 72 can be hardwired to the 2:1 weighting MUX 67, 73 for a fixed R factor or the R factor may be downloaded from the GPS processor 18 along with the control words for each signal processor channel $22_{(1-X)}$. The number of input weighting bits for the MUX 67, 73 depends on the maximum value of the R factor selected. The advantage of the present invention is that the R factor register 66, 72 and the 2:1 weighting MUX 67, 73 are common to all Y-taps I or Q in the multi-Y-tap correlator/integrators 38, 40. The simple control for the 2:1 weighting MUX 67, 73 is the maximum value for the magnitude IMI of the I or Q A/D sample $I_{out}$ or $Q_{out}$ in FIG. 3). With a 2-bit A/D (FIG. 6) the sign bit is plus or minus and the magnitude bit is logic zero for inside crossings and logic one for outside crossings, the maximum value of the magnitude IMI. The general case with an N-bit A/D (FIG. 7) is the plus or minus sign bit with more than one magnitude bit. In this general case when each one of the magnitude bits is equal to logic one, it is an outside crossing weighted by the R factor. The weightings for no outside crossings are listed in Tables 4, 5 and 6. In this general case the magnitude of M is not at maximum value and magnitude $IMI_{MAX}$ selects the logic 0 MUX weighting input. With a 2-bit A/D (FIG. 6) the input weighting is 1, and for an N-bit A/D (FIG. 7), the input weighting is 1+IMI. In a special case of a 1-bit A/D there is only the plus or minus sign bit and the magnitude is logic 0; there are no outside crossings. In the present embodiment of a 2-bit A/D input as shown in FIG. 6, the R factor register 66 equal to 0 results in evaluating only inside crossings as defined in Table 6. By setting the R factor register 66 equal to 1 results in the equivalent processing of a 1-bit A/D input. Setting the R factor register 66 equals to 2(K=0) produces a linear 2-bit A/D converter magnitude weight for outside crossings of the A/D sample. Setting the R factor register 66 between 3 and 7 (2+K for K between 1 and 5) produces the adaptive 2-bit A/D converter magnitude weight for outside crossings of the A/D sample. The linear and adaptive magnitude weights are determined by equations listed in Table 3 and Table 4 and by example and equations in Table 5 and Table 6. Such one's compliment magnitude weighting reduces the number of input weighting bits that have to be distributed. The selected I or Q input weighting magnitude BWTG is distributed to all of the multi-Y-tap I or Q correlator/integrators 38, 40. The advantages of the present invention sign and magnitude input weighting include compatability with any size A/D (1 to N bits), the magnitude IMI is simply the one's compliment of the magnitude samples when the sign bit is negative, the single R factor register 66, 72 can be down loaded from the GPS processor 18 for any desired R factor value, and the I and Q A/D sample weight (BWTG or BWTGX) is common to all I or Q correlator/integrator taps (88-102, 114-128) as shown in FIGS. 8 and 9. Using the sign and magnitude in the I or Q correlator/integrator 88 in the present invention provides the following advantages: for correlation the PN-code reference only has to be exclusive-OR'd with the sign bits for plus and minus adder control; the B input is sign extended and added to A for plus control; minus control takes the one's compliment of the sign extended B input; the plus or minus adder control is the carry-in (CIN) to the adder; the integrator output is latched in an output register 71 by the $T_{cj}$ pulse, the correlation time interval, and the first sample in the new correlation interval, can be loaded directly into the accumulator register 69 by bypassing the adder 68 or adding zero with the first sample using the $T_{cj}$ timing pulse for control.

The 2-bit correlator/integrator 38, 40 for the sign and magnitude A/D converter bits is shown functionally in FIG. 6 and the details of the present embodiment are shown in FIGS. 8 and 9. The sign and magnitude input weights are listed in Table 2. The R factor for the 2-bit adaptive A/D is $1+IMI_{MAX}+K = 2+K$. The R factor register 66 when loaded by the GPS Processor 18 is 3-bits for values of 0 to 7.

Referring now to FIG. 8, a block diagram of the I multi-Y-tap correlator/integrator 38 is shown comprising eight I correlator/integrator taps 88-102 (TAP0-TAP7). In the signal names listed in FIG. 8, X represents a channel number, Y indicates the tap number and N indicates an active low logic signal. A control register 80 receives a 3-bit data word, WDI(2:0), for an R factor input from a word data input bus (WDI). A 3-bit binary input LLH representing the inside crossing weight is hard wired to a 2:1 I weighting MUX 84 equal to the binary number 001. The 3-bit R factor output of control register 80 representing the outside crossing weight is coupled to an R factor register 82. The output of the R factor register 82 is coupled to the 2:1 I weighting multiplexor (MUX) 84. The magnitude of $I_{OUT}$ data (IMII) generated by exclusive-OR (XOR) gate 86 is coupled to the select B input of the 2:1 I weighting MUX 84. The logic for selecting the inside crossing weight or the outside crossing weight for the I A/D samples is listed in Table 2. The inputs to XOR gate 86 are the $I_{OUT}$ data sign (SIX) and $I_{OUT}$ magnitude (MIX). The output of the 2:1 I weighting multiplexor 84 is the B weight (BWTGX)which is coupled to an input of each one of the I correlator and integrators 88-102. The sign (SIX) of the $I_{OUT}$ data is also coupled to an input of each I correlator and integrator multi-8-taps 88-102 in addition to the input timing clock 2FSXN. The outputs of I correlator and integrators (TAP0-TAP7) are coupled to the I output registers/ OVF CNTL 104-118 respectively.

Referring now to FIG. 9, a block diagram of the Q multi-Y-tap correlator/integrator 40 is shown comprising eight Q correlator/integrators 114-128 (TAP0-TAP7). A 2:1 Q weighting multiplexor (MUX) 110 receives the 3-bit LLH binary input representing the inside crossing weight and the 3-bit RX factor representing the outside crossing weight from the R factor register 82 shown in FIG. 8. The output of the 2:1 Q weighting MUX 110 is the B weight (BWTGX) which is coupled to an input of each one of the Q correlator/integrators 114-128. The select B input of MUX 110 is coupled to the output of an exclusive-OR (XOR) gate 112 which generates the magnitude of $Q_{OUT}$ data (IMQI). The logic for selecting the inside crossing weight or the outside crossing weight for the Q A/D sample is listed in Table 2. The input to such XOR gate 112 comprises the magnitude of $Q_{OUT}$ data (MQX) and the sign of the $Q_{OUT}$ data (SQX). The sign of $Q_{OUT}$ data (SQX) is also coupled to an input of each Q correlator and integrator tap 114-128 in addition to the input timing clock 2FSXN. The output of each Q correlator and integrator 114-128 is fed to Q output register/OVF CNTL 130-144 respectively between correlation intervals ($T_{cj}$).

Referring to FIGS. 3, 5 and 9, over any correlation interval $T_{cj}$ there is an integer number of 2FSXN clock cycles, an integer number of PN-code chips, an integer number of Fo clock cycles and an integer number of NCO clocks. The exact time zero for each correlation interval is when the PN-coder control signal and NCO control signal from serial input port 44 are synchronously loaded to start the new correlation interval by $T_{cj}$ timing pulse. The reference code in FIGS. 3 and 5 is reclocked by 2FSXN in the I and Q code reference generator 36 to align the PN-code reference replica with the incoming A/D samples. The carrier NCO 44 output is reclocked by 2FSXN in the phase rotator 32 to align the carrier NCO output with the incoming A/D samples. The clock delays generator 146 in Fig. 9 accounts for the PN-code Fo clock cycle propagation delays through the C/A coder 48 or P-codes 50, code MUX 52, PN-code delay controller 3, and the 2FSXN clock delays through D-flip-flop 57, 58 and 60 shown in FIG. 5. The 9-bit shift register 148 delays for PN-code chip spacing shown in Table 1 accounts for the IREF and QREF shift registers 62, 63 delays to guarantee that each correlator/integrator tap (88-102) and (114-128) correlates and integrates the same PN-code reference replica sequence for exactly the correlation interval time $T_{cj}$ (1 ms). The correlation is performed continuously at the A/D sample rate. The integrator function is to integrate over a fixed time interval which is the time between correlation intervals and then transfer each integrator tap output (TAP0-TAP7) to its corresponding holding output register/OVF CNTL 130-144. The value accumulated in the integrator is set to zero (DUMPED) at the start of a new correlation interval. The first correlated value in the new correlation interval is the first A/D input weighted sample BWTGX.

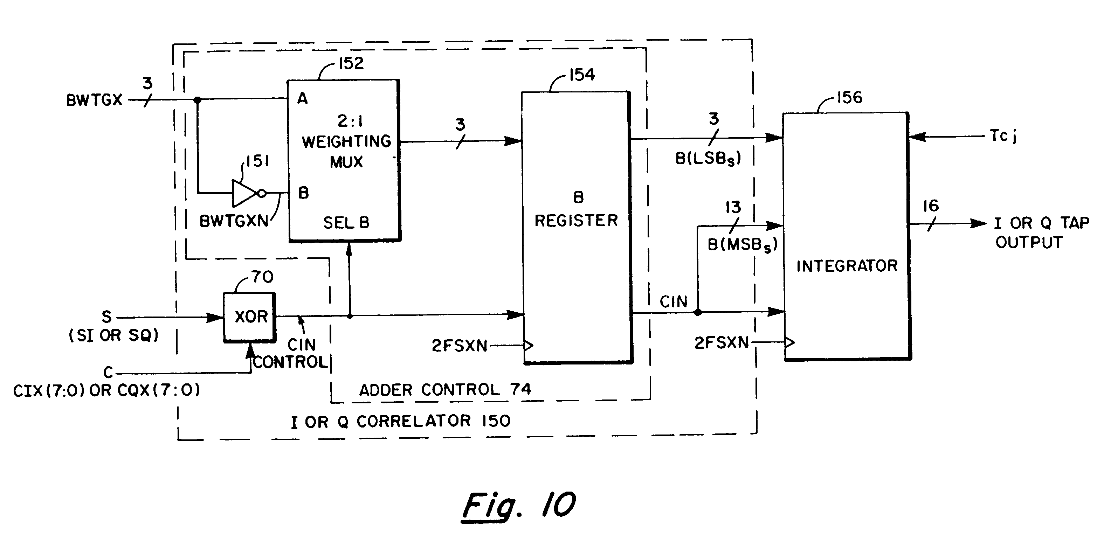

Referring now to FIG. 10, a more detailed logic diagram of the I or Q correlator 15C is shown coupled to the integrator 156 in the I or Q correlator/integrator tap of Fig. 6. The XOR gate 70 determines if there is a match or mismatch between the sign bit (S) and the PN-code reference replica (C) producing a carry-in CIN signal for the correlation as shown in Table 7. In the correlator 150, CIN signal is fed to a 2:1 weighting multiplexor (MUX) 152 and also fed to a B register 154, which in combination implement the adder control 74. The weighting data, BWTGX and BWTGXN (from inverter 151), are coupled to the inputs of the 2:1 weighting MUX 152 and CIN determines whether BWTGX or its compliment BWTGXN is gated to the B register for clocking to the integrator 156. The 3-bit weighting data to the B register is clocked at the sample rate 2FSXN into the pipeline B register 154 for input to the integrator 156. Table 7 lists the PN-code I or Q correlation and integration functions performed in the I and Q correlator 150 and integrator 156 depending on the value of the carry-in CIN signal.

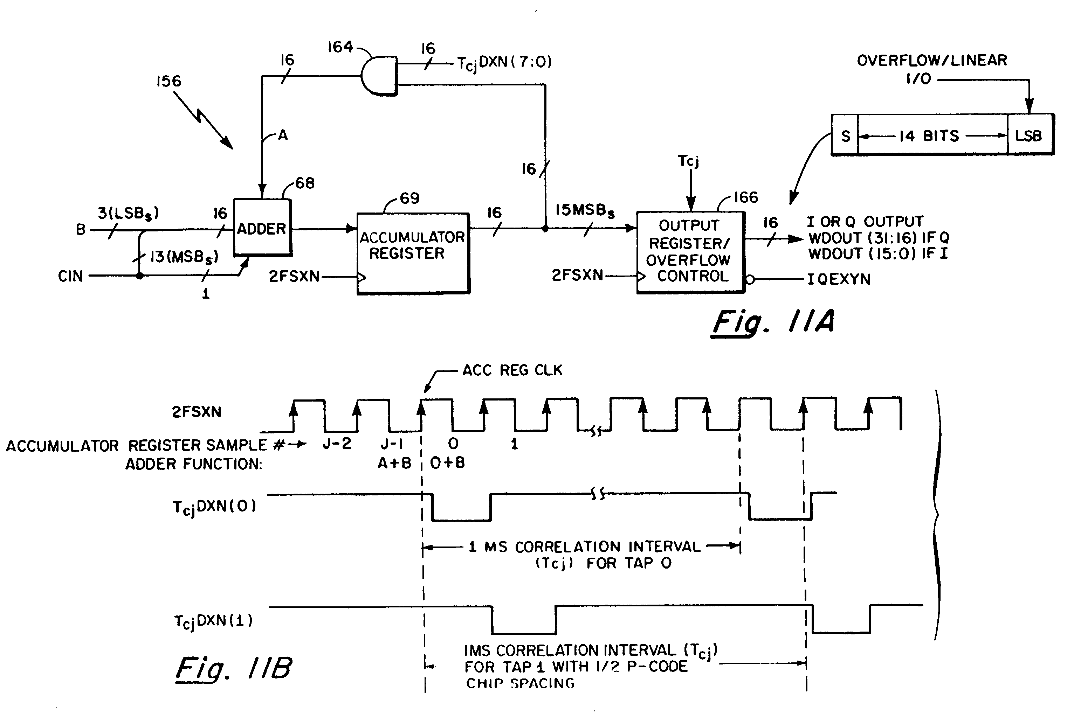

Referring now to FIGS. 10, 11A and 11B, a detailed logic diagram of the integrator 156 is shown in FIG. 11A comprising the adder 68 coupled to accumulator register 69. The 16-bit input to adder 68 is coupled to the 3 LSB positions of the B register 154 in FIG. 10 and the CIN signal is coupled to the 13 MSB positions of the B register 154 to sign extend the B input to 16-bits. The 16-bit A input of the adder 68 is generated by AND gate 164 having a first input comprising 16-bits from the accumulator register 69 outputs and the second input being the $T_{cj}$ DXN(7:0) timing signals. One particular timing signal is selected by the tap and is coupled to the 16-bit positions for a zero input to adder 68 when the $T_{cj}$ DXN timing pulse is active at the start of a new correlation interval $T_{cj}$. For tap 0, the selected timing pulse is $T_{cj}$DXN(0) (shown in Fig. 11B) which is input to AND gate 164. The output of adder 68 is coupled to accumulator register 69 which is clocked by the 2FSXN sample clock. The output of the accumulator register 69 is fed back to the adder 68 via

TABLE 7

| PN-CODE I OR Q CORRELATOR/INTEGRATOR TAP 88 ARITHMETIC | | | | |
|---|---|---|---|---|
| S | C | CORRELATOR S XOR C = CIN | INTEGRATOR | COMMENT |
| 0 | 1 | 1 | $A-B \equiv A+BN+CIN$ | Mismatch |
| 0 | 0 | 0 | $A+B+CIN$ | Match |
| 1 | 1 | 0 | $A+B+CIN$ | Match |
| 1 | 0 | 1 | $A-B \equiv A+BN+CIN$ | Mismatch |

When: CIN = 0 = ADD
CIN = 1 = SUBTRACT
Where: A = Accumulator Register Output
B = BWTGX, where X is the channel number
BN = BWTGXN (the Inverted BWTGX)
S = SIGN BIT SI or SQ
C = Code reference CIXY or CQXY
X = Channel number
Y = Correlator/integrator tap number
N = Active Low Logic
Note: The trailing letter convention is XYN, XY, XN, YN, X, Y, N.

AND gate 164 and is gated by timing interval signals $T_{cj}$DXN(7:0) and two of these timing signals for integrator 156 tap 0 and 1 are shown in Fig. 11B in relation to sample clock 2FSXN. The 15 MSB output of accumulator register 69 is coupled to an output register overflow control 166 also clocked by 2FSXN in accordance with the occurrence with the correlation timing interval $T_{cj}$. The overflow control output comprises the 16-bit word outputs $WD_{OUT}$ (15:0) for the I integrator 156 and $WD_{OUT}$ (31:16) for the Q integrator 156. At the start of a correlation interval, the $T_{cj}$DXN(7:0) pulses for each I and Q correlator/integrator tap are used to enable zeroing of the A input to the adder 68 for the first A/D sample correlated in the new correlation interval. The 2-bit A/D sample input weight B is plus or minus one for inside crossings. The 2-bit A/D sample input weight B is plus or minus five for outside crossings with an R factor of 5.

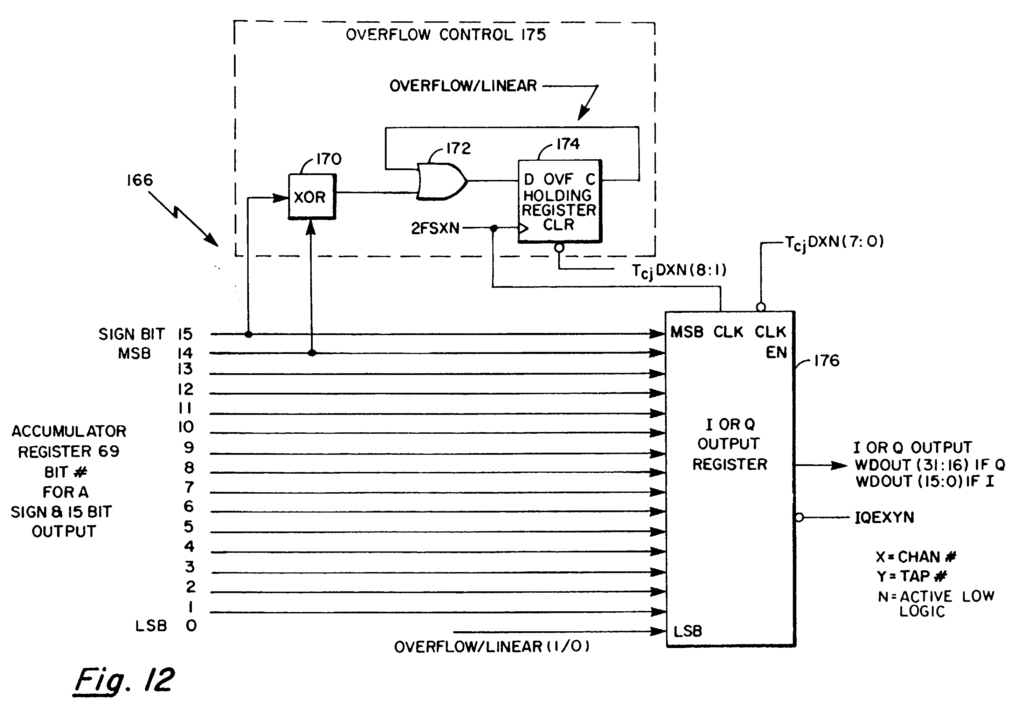

The output register/overflow control 166 is shown in more detail in Fig. 12 which is a block diagram of the I or Q correlator/integrator tap output register 176 and its overflow 175 control for overflow detection.

Each correlator/integrator tap requires two timing pulses. The timing pulses for tap 0, $T_{cj}$DXN(0) and $T_{cj}$DXN(1), are shown in Fig. 11B. For tap 0, the timing pulse $T_{cj}$DXN(0) enables the I or Q output register 176 (Fig. 12) to clock in and then hold the correlated and integrated value for the GPS processor 18 to read one I and Q 32-bit output tap word $WD_{OUT}$(31:16) and $WD_{OUT}$(15:0) at a time over the serial output port 42 shown in FIG. 3. The timing pulse $T_{cj}$DXN (0) is also used to enable AND gate 164 to zero (dump) the integrated value.

On the next rising edge of the 2FSXN clock, timing pulse $T_{cj}$DXN(1) is used to clear the overflow (OVF) holding register 174 for tap 0. The basic timing for each pulse $T_{cj}$DXN(8:0) and tap as shown in FIG. 4 is for 1/2 P-code chip spacing, which is approximately one I and Q sample clock 2FSN. The other chip spacings are controlled by the counter 54 and 4:1 MUX 55 shown in FIG. 5. The SPACEN output of the 4:1 MUX 55 is used to enable clocking the IREFX shift register 62, QREFX shift register 63, and the timing 9-bit shift register 148 (in FIG. 9). The 9-bit timing shift register 148 outputs $T_{cj}$DXN (7:0) for each correlator/integrator tap ensure that each tap correlates the same PN-code sequence for the correlation time interval $T_{cj}$ (1 ms).

The timing pulse for the correlation interval Tcj after clock delays generator 146 (Fig. 9) is delayed in the 9-bit shift register 148 to account for the PN-code chip spacing delays. The 9-bit shift register 148 outputs TcjDxN[7:0] are used to enable the 2FSXN clock on each I or Q output register 176 for holding each tap integrated value for one correlation interval to the next for the GPS processor 18 to read. The 9-bit shift register outputs $T_{cj}DXN(8:1)$ are used to clear the overflow holding register 174 in each tap one clock pulse after capturing the correlated integrated accumulator register 69 output and the overflow holding register 174 output in the I or Q output register 176.

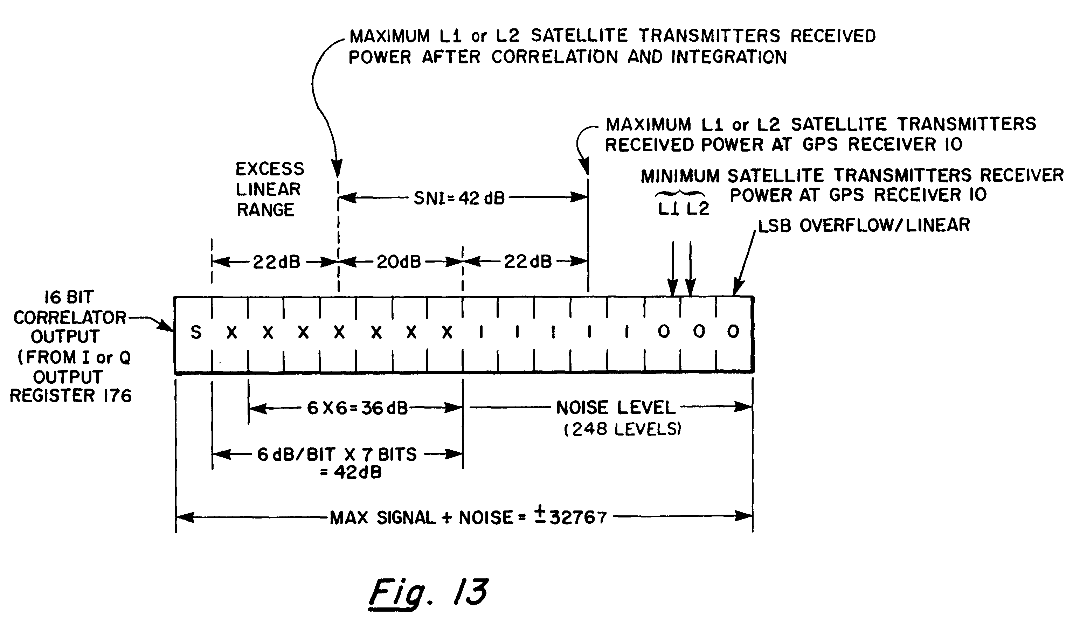

Referring now to FIG. 12 and FIG. 13, the I or Q integrator overflow control logic is shown in Table 8. Overflow is tested using XOR gate 170 coupled to OR-gate 172 as shown in Table 8 for each sample and latched in the OVF holding register 174 when detected. The OR-gate 172 holds any detected overflow for the remaining time of the correlation interval ($T_{cj}$). At the end of the correlation interval ($T_{cj}$), the overflow bit is clocked into I or Q output register 176 by timing pulses $T_{cj}DXN(7:0)$, one for each tap and the overflow stored in holding register 174 is cleared one 2FSXN clock later for the next correlation interval by timing pulses $T_{cj}DXN(8:1)$ one for each tap. Overflow/linear operation is clocked into the LSB of the output register 176 at the end of the correlation interval with the 15 MSBs of the integrator 156. With satellite PN-codes, the correlator is always linear and the LSB is equal to zero.

TABLE 8

| INTEGRATOR 156 OVERFLOW CONTROL LOGIC | | | |
|---|---|---|---|
| BIT(15) | MSB BIT(14) | BIT(15) XOR BIT(14) | OUTPUT |
| 0 | 0 | 0 | ACCUMULATOR REGISTER |
| 0 | 1 | 1 | + OVERFLOW SET OUTSIDE LSB |
| 1 | 0 | 1 | - OVERFLOW SET OUTSIDE LSB |
| 1 | 1 | 0 | ACCUMULATOR REGISTER |

The overflow detection is required when the correlator references CIX(7:0) and CQX(7:0) are a logic one.

Referring now to FIG. 13, the I or Q noise level and linear range of the 16-bit correlator/integrator 38, 40 output is shown for θ equal to 10 percent outside crossings of the A/D samples. Algorithms used for built-in-test and other applications use the overflow bit. The A/D I data and Q data from the GPS receiver front end 14 has doppler frequency removed by the phase rotator 32 (FIG. 3) and the PN-code stripped off by the correlator 150 (FIG. 10) and the integrator 156 (FIG. 10) integrates the correlator match or mismatched correlations defined in Table 7 to provide signal-to-noise improvement of the received PN-code modulated carrier. The maximum received power signal-to-noise at the GPS receiver 10 for the L1 and L2 satellite transmitters is -22dB. The minimum received power signal-to-noise levels for L1 is -35dB and for L2 is -38dB. The equivalent received signal-to-noise levels and the correlator/integrator output level for the maximum L1 or L2 satellite transmitters received power at the GPS receiver 10 is shown in FIG. 13. The example in FIG. 13 is for a signal-to-noise improvement (SNI) of 42dB and is for the following parameters:

R factor = 5, θ = 10%,
2FS = 23.188MHZ, I or Q sample rate
Number of I and Q samples in 1MS = 23188 Hence,

$$\text{I or Q noise} = \sqrt{23188} + \sqrt{(R-1) \times \theta \times 23188} = 248$$
$$\text{I or Q signal} = 23188 + (R-1) \times \theta \times 23188 = 32463$$
SNI = signal-to-noise improvement
$$= 20LOG\ (32463/248) = 42\ dB$$
θ equals Percentage of A/D outside crossings

The X-channel signal processor 16 of the GPS receiver 10 comprising the present invention may be embodied by a complementary metal-oxide semiconductor (CMOS) very large scale integrated (VLSI) circuit chip using 1.0 micron technology. A 5-channel signal processor VLSI chip for a P-code, C/A code and an external code comprises approximately 100,000 gates. Such a chip, with its repetitive channels and large number of buses can be implemented in a cell based family gate array or sea-of-gates gate array as manufactured by Raytheon Company, of Lexington, Massachusetts, and VLSI Technology, Inc. of San Jose, California. The die or chip is approximately 500 mils square dissipating less than one watt of power. The P-coder and 8-tap I and Q correlator/integrators 38, 40 for 5-channels comprises approximately 60 percent of the chip or die area. Implementing a C/A code only 5-channel receiver with a three tap I and Q correlator/integrator 38, 40 comprises approximately 60,000 gates requiring a die or chip size of approximately 400 mils square. The extended C/A code range is shown in Table 1. The signal processor 16 VLSI chip employs a serial input and output interface to reduce the number of signal pins required for the VLSI chip package. This provides for a wide array of packaging options including both surface mount and thruhole technologies.

The GPS receiver front end 14 may be embodied with relatively low power gallium arsenide or silicon technology as manufactured by Raytheon Company of Lexington, Massachusetts, and Triquint Semiconductor of Beaverton, Oregon. The GPS processor 18 may be embodied by an off-the-shelf single chip, CMOS, 32-bit processor as manufactured by Texas Instruments of Dallas, Texas, and Motorola of Pheonix, Arizona.

This concludes the description of the preferred embodiment. However, many modifications and alterations will be obvious to one of ordinary skill in the art without departing from the spirit and scope of the inventive concept. For example, the correlator/integrator 38, 40 may be used with a GPS receiver 10 having either baseband sampling or IF sampling in the GPS receiver front end (RFE) 14. The contents of the R factor registers 66, 67, 82 may be fixed or programmable via the GPS processor 18. The R factor values loaded into the R factor registers 66, 67, 82 result in several modes of operation comprising the equivalent processing of an N-bit to a 1-bit A/D input. Other modes of operation provide for evaluating only inside crossings, provide for a linear N-bit A/D or an adaptive N-bit A/D converter magnitude weight for outside crossings of the A/D samples. Therefore, it is intended that the scope of this invention be limited only by the appended claims.

## Claims

1. A Global Positioning System receiver comprising:

    receiving means (14) for performing sampling of a received PN-code modulated carrier to generate in-phase (I) and quadrature-phase (Q) samples;
    signal processor means (16) coupled to outputs of said receiving means (14) for removing a doppler frequency and PN-code modulation from said modulated carrier, said signal processor means (16) comprising a plurality of channels (22), each of said channels (22) including a correlator means (24) for correlating said I and Q samples with at least an in-phase component (IREFX) of an internally generated PN-code reference;
    and means (18) coupled to said signal processor means (16) for processing the outputs of the correlator means (24) to determine the phase of said carrier signal, to provide multi-channel control signals to said signal processor means (16) and to estimate a pseudo-range and a pseudo-range rate, <u>characterised in that</u> each correlator means (24) includes means (82,84,86,110,112) for weighting the samples in dependence upon their magnitudes, each weighting means includes means (86,112) for generating in-phase (IMII) and quadrature-phase (IMQI) weight selecting signals derived from the signs and magnitudes of the samples and respectively representative of whether the analog magnitudes of the in-phase (I) and quadrature-phase (Q) samples are outside a predetermined threshold, and an in-phase weight selector (84) controlled by the in-phase weight selecting signal and a quadrature weight selector (110) controlled by the quadrature weight selecting signal, each weight selector (84,110) being adapted to be controlled to apply in the correlator means (24) a predetermined maximum weighting factor (R) when the respective weight selecting signal (IMII,IMQI) indicates a sample analog magnitude outside the predetermined threshold, and to apply in the correlator means (24) a weighting factor that is a quantized function of the sample analog magnitude when the respective weight, selecting signal (IMII,IMQI) indicates a sample analog magnitude inside the predetermined threshold.

2. A receiver according to claim 1, characterised in that the receiving means (14) includes analog to digital conversion means for converting each in-phase (I) and quadrature-phase (Q) sample into a digital value having a sign bit and (N-1) magnitude bits, and in that each weight selector (67;73) is adapted to apply in the correlator means (24) a weighting factor that is (1+IMI), where IMI is the quantized magnitude represented by the magnitude bits of the sample, when the respective weight selecting signal indicates a sample analog magnitude inside the predetermined threshold, and in that the maximum quantized magnitude $IMI_{MAX}$ represented by the magnitude bits of the digitized sample corresponds to an analog magnitude outside the predetermined threshold.

3. A receiver according to claim 1, characterised in that said receiving means (14) comprises IF sampling means for generating said I and Q samples.

4. A receiver according to claim 1, characterised in that said receiving means (14) comprises baseband sampling means for generating said I and Q samples.

5. A receiver according to claim 4, characterised in that said correlator means (24) comprises means (38,40) for correlating said I and Q samples with the in-phase component (IREFX) only of said internally generated PN-code reference.

6. A receiver according to claim 1, characterised in that the weighting means of said correlator means (24) comprises:

register means (82) for storing the predetermined maximum weighting factor(R) ; and
logic means (86,112) coupled to said weight selectors (84,110) for generating said weight selecting signals in response to signals representing the signs and magnitudes of said samples.

7. A receiver according to claim 6, characterised in that the weight selectors comprise:

an I weighting multiplexer (84) having a first input coupled to said register means (82) and a second input coupled to receive an inside crossing weight; and
a Q weighting multiplexer (110) having a first input coupled to said register means (82), and a second input coupled to receive an inside crossing weight.

8. A receiver according to claim 6, characterised in that the receiving means (14) includes analog to digital conversion means for converting each in-phase (I) and quadrature phase (Q) sample into a digital value having a sign bit and a single magnitude bit, and in that said logic means comprises means (86,112) for performing an exclusive-OR logic function with the in-phase sample sign bit and the in-phase sample magnitude bit, and an exclusive -OR logic function with the quadrature-phase sample sign bit and the quadrature-phase sample magnitude bit.

9. A receiver according to claim 1, characterised in that each correlator means (24) includes adder control means (74) coupled to the weighting means (67) and operating to determine whether each of a succession of said weights is added to or subtracted from an accumulated value of said weights in accordance with a correlator control signal;

means (70) for generating said correlator control signal by comparing the sign of each corresponding sample with a PN-code reference signal; and
integrator means (68,69) coupled to said adder control means (74) and said correlator control signal generating means (70) for accumulating and integrating said weights over a correlation time interval.

10. A receiver according to claim 9, characterised in that said correlator control signal generating means comprises means (70) for performing an exclusive-OR logic function with a sign bit and a code bit.

11. A receiver according to claim 1, characterised in that each of said channels (24) comprises:

(a) means (32) for removing received carrier doppler from said in-phase (I) and quadrature-phase (Q) samples;
(b) means (48,50,52,34,36) for generating a PN-code reference which is a replica of said received PN-code, said PN-code reference having an in-phase (IREF) component and a quadrature-phase (QREF) component; and
(c) means (38,40), coupled to said carrier doppler removing means (32) and said PN-code reference replica generating means (48,50,52,34,36), for correlating said I and Q samples with said IREF and QREF components respectively of said replicated PN-code, said correlating means (38,40) comprising a plurality of I multi-Y-tap correlator/integrators (88-102) and a plurality of Q multi-Y-tap correlator/integrators (114-128), with the in-phase weight selector (84) arranged to apply weights selected thereby to the I multi-Y-tap correlator/integrators (88-102), and the quadrature-phase weight selector (110) arranged to apply weights selected thereby to the Q multi-Y-tap correlator integrators (114-128).

12. A receiver according to claim 11, characterised in that each weighting means comprises a register means (82) for storing the predetermined maximum weighting factor (R).

13. A receiver according to claim 12, characterised in that the predetermined maximum weighting factor is variable under programmed control.

14. A receiver according to claim 12, characterised in that the predetermined maximum weighting factor (R) is a constant for a specific correlation interval ($T_{cj}$).

15. A receiver according to claim 11, characterised in that said receiving means (14) comprises IF sampling means.

16. A receiver according to claim 11, characterised in that said receiving means (14) comprises baseband sampling means.

17. A receiver according to claim 16, characterised in that said correlator means (24) comprises means for correlating said I and Q samples with the in-phase component (IREFX) only of said internally generated PN-code reference.

18. A receiver according to claim 11, characterised in that each input weighting means comprises:

register means (82) for storing the predetermined maximum weighting factor (R); and

logic means (86,112) coupled to said weight selectors (84,110) for generating said weight selecting signals in response to signals representing the signs and magnitudes of said samples.

19. A receiver according to claim 18, characterised in that the receiving means (14) includes analog to digital conversion means for converting each in-phase (I) and quadrature phase (Q) sample into a digital value having a sign bit and a single magnitude bit, and in that said logic means comprises means (86,112) for performing an exclusive-OR logic function, with the in-phase sample sign bit and the in-phase sample magnitude bit, and an exclusive -OR logic function with the quadrature-phase sample sign bit and the quadrature-phase sample magnitude bit.

20. A receiver according to claim 11, characterised in that each correlator means (24) includes adder control means (74) coupled to the weighting means (67) and operating to determine whether each of a succession of said weights is added to or subtracted from an accumulated value of said weights in accordance with a correlator control signal;

means (70) for generating said correlator control signal by comparing the sign of each corresponding sample with a PN-code reference signal; and
integrator means (68,69) coupled to said adder control means (74) and said correlator control signal generating means (70) for accumulating and integrating said weights over a correlation time interval.

21. A receiver according to claim 20, characterised in that said correlator control signal generating means comprises means (70) for performing an exclusive-OR logic function with a sign bit and a code bit.

22. A receiver according to claim 1, characterised in that each said correlator means (24) comprises a plurality of I multi-Y-tap correlator/integrators (88-102) and a plurality of Q multi-Y-tap correlator/ integrators (114-128), with the in-phase weight selector (84) arranged to apply weights selected thereby to the I multi-Y-tap correlator/integrators (88-102), and the quadrature-phase weight selector (110) arranged to apply weights selected thereby to the Q multi-Y-tap correlator/integrators (114-128).

23. A receiver according to claim 22, characterised in that each weight selecting signal generating means comprises logic means (86,112) for generating the weight selecting signals in response to signals representing the signs and magnitudes of said I samples provided to a first (86) of said logic means coupled to the in-phase weight selector (84) and to signals representing the signs and magnitudes of said Q samples provided to a second (112) of said logic means coupled to the quadrature-phase weight selector (110).

**Patentansprüche**

1. Empfänger für globales Positicnsgabesystem (GPS-Empfänger), enthaltend:

Empfangseinrichtungen (14) zur Durchführung der Tastungsprobennahme eines empfangenen PN-Code-modulierten Trägers zur Erzeugung in Phase liegender (I) und in Phasenquadratur liegender (Q) Tastungsproben; Signalverarbeitungsmittel (16), welche mit Ausgängen der genannten Empfangseinrichtung (14) gekoppelt sind, um eine Dopplerfrequenz und die PN-Codemodulation von dem genannten modulierten Träger zu entfernen, wobei die Signalverarbeitungsmittel (16) eine Mehrzahl von Kanälen (22) enthalten, von denen jeder eine Korrelationseinrichtunq (24) zum Korrelieren der I- und Q-Tastungsproben mit mindestens einer in Phase liegender Komponente (IREFX) eines intern erzeugten PN-Codebezugs enthält; sowie
mit den genannten Signalverarbeitungsmitteln (16) gekoppelte Mittel (8) zur Verarbeitung der Ausgänge der Korrelationseinrichtungen (24) zur Bestimmung der Phase des Trägersignals, zur Lieferung von Mehrfachkanal-Steuersignalen an die Signalverarbeitungsmittel (16) und zur Abschätzung einer Pseudoentfernung und einer Pseudoentfernungs-Geschwindigkeit,

dadurch gekennzeichnet, daß jede der Korrelationseinrichtungen (24) Einrichtungen (82, 84, 86, 110, 112) zur Gewichtung der Tastungsproben in Abhängigkeit von ihren Beträgen enthält, wobei die Gewichtungseinrichtungen jeweils Mittel (86, 112) zur Erzeugung phasengerechter (IMII) und in Phasenquadratur befindlicher (IMQI) Gewichtungsauswahlsignale enthalten, welche von den Vorzeichen und Beträgen der Tastungsproben abgeleitet sind und jeweils dafür repräsentativ sind, ob die analogen Beträge der phasengerechten (I) und in Phasenquadratur befindlichen (Q) Tastungsproben außerhalb eines vorbestimmten Schwellwertes liegen, und weiter einen Phasengerecht-Gewichtungs-Wähler (84), der durch das Phasengerecht-Gewichtungs-Auswahlsignal gesteuert ist, sowie einen Quadratur-Gewichtungs-wähler (110) enthält, der durch das Quadratur-Gewichtungs-Auswahlsignal gesteuert ist, wobei jeder Gewichtungswähler (84, 110) so ausgebildet ist, daß er in den Korrelationseinrichtungen (24) einen vorbestimmten maximalen Gewichtungsfaktor (R) zur Wirkung bringt, wenn das jeweilige Auswahlsignal (IMII, IMQI) einen analogen Betrag einer Tastung außerhalb des vorbestimmten Schwellwertes anzeigt, und in den Korrelationseinrichtungen (24) einen Gewichtungsfaktor wirksam werden läßt, der eine quantisierte Funktion des analogen Tastungsprobenbetrages ist, wenn das jeweilige Gewichtungsauswahlsignal (IMII, IMQI) einen analogen Tastungsprobenbetrag anzeigt, der innerhalb des vorbestimmten Schwellenwertes liegt.

2. Empfänger nach Anspruch 1, dadurch gekennzeichnet, daß die Empfangseinrichtungen Analog-/Digital-Wandlermittel zur Umwandlung jeder phasengerechten (I) und in Phasenquadratur befindlichen (Q) Tastungsprobe in einen Digitalwert enthalten, der ein Vorzeichenbit und (N-1) Betragsbits aufweist, und daß jeder Gewichtungswähler (67, 73) so ausgebildet ist, daß er in den Korrelationseinrichtungen (24) einen Gewichtungsfaktor zur Wirkung bringt, der (1+IMI) ist, worin IMI der quantisierte Betrag ist, der durch die Betragsbits der Tastungsprobe dargestellt ist, wenn das jeweilige Gewichtungsauswahlsignal einen-analogen Tastungsprobenbetrag innerhalb des vorbestimmten Schwellwertes anzeigt, und daß der maximale quantisierte Betrag $IMI_{max}$, der durch die Betragsbits der digitalisierten Tastungsprobe repräsentiert wird, einem analogen Betrag außerhalb des vorbestinmten Schwellwertes entspricht.

3. Empfänger nach Anspruch 1, dadurch gekennzeichnet, daß die Empfangseinrichtungen (14) zwischenfrequenz-Tastungsmittel zur Erzeugung der phasengerechten und der in Phasenquadratur befindlichen Tastungsproben enthalten.

4. Empfänger nach Anspruch 1, dadurch gekennzeichnet, daß die Empfangseinrichtungen (14) Basisband-Tastungsmittel zur Erzeugung der phasengerechten und der in Phasenquadratur befindlichen Tastungsproben enthalten.

5. Empfänger nach Anspruch 4, dadurch gekennzeichnet, daß die Korrelationseinrichtungen (24) Mittel (38, 40) zum Korrelieren der phasengerechten und der in Phasenquadratur befindlichen Tastungsproben nur mit der phasengerechten Komponente (IREFX) des intern erzeugten PN-Codebezuges enthalten.

6. Empfänger nach Anspruch 1, dadurch gekennzeichnet, daß die Gewichtungseinrichtungen der Korrelationseinrichtungen (24) folgendes enthalten:

    Registermittel (82) zur Speicherung des vorbestimmten maximalen Gewichtungsfaktors (R); und
    logische Schaltungsmittel (86, 112), welche mit den Gewichtungswählern (84, 110) gekoppelt sind, um die Gewichtungsauswahlsignale in Abhängigkeit von Signalen zu erzeugen, welche die Vorzeichen und Beträge der genannten Tastungsproben repräsentieren.

7. Empfänger nach Anspruch 6, dadurch gekennzeichnet, daß die Gewichtungswähler folgendes enthalten:

    einen I-Gewichtungs-Multiplexer (84), welcher einen ersten, mit den genannten Registermitteln (82) gekoppelten Eingang und einen zweiten Eingang aufweist, der so beschaltet ist, daß er eine innerhalb der Überschreitung befindliche Gewichtung empfängt; und
    einen Q-Gewichtungs-Multiplexer (110), welcher einen ersten, mit den genannten Registermitteln (82) gekoppelten Eingang, und einen zweiten Eingang enthält, welcher so beschaltet ist, daß er eine innerhalb der Überschreitung befindliche Gewichtung empfängt.

8. Empfänger nach Anspruch 6, dadurch gekennzeichnet, daß die Empfangseinrichtungen (14) Analog-/Digitalwandlermittel zur Umwandlung jeder phasengerechten (I) und jeder in Phasenquadratur befindlichen (Q) Tastungsprobe in einen Digitalwert enthalten, welcher ein Vorzeichenbit und ein einzelnes Betragsbit enthält, und daß die genannten logischen Schaltungsmittel Mittel (86, 112) zur Ausführung einer logischen EXCLUSIV-ODER-Funktion an dem Vorzeichenbit der phasengerechten Tastung und an dem Betragsbit der phasengerechten Tastung, sowie einer logischen EXCLUSIV-ODER-Funktion an dem Vorzeichenbit der in Phasenquadratur befindlichen Tastung und dem Betragsbit der in Phasenquadratur befindlichen Tastung enthalten.

9. Empfänger nach Anspruch 1, dadurch gekennzeichnet, daß jede Korrelationseinrichtung (24) mit der Gewichtungseinrichtung (67) gekoppelte Additionssteuermittel (74) enthält, welche in der Weise arbeiten, daß sie bestimmen, ob jede aus einer Folge von Gewichtungen von einem akkumulierten Wert der genannten Gewichtungen entsprechend einem Korrelations-Steuersignal addiert oder subtrahiert wird;

   wobei Mittel (70) zur Erzeugung des genannten Korrelationssteuersignales durch Vergleichen des Vorzeichens jeder entsprechenden Tastungsprobe mit einem PN-Code-Bezugssignalvorgesehen sind; und
   wobei Integratormittel (68, 69) vorgesehen sind, die mit den genannten Additionssteuermitteln -(74) und den das korrelationssteuersignalerzeugenden Mitteln (70) gekoppelt sind, um über ein Korrelationszeitintervall die Gewichtungen zu akkumulieren und zu integrieren.

10. Empfänger nach Anspruch 9, dadurch gekennzeichnet, daß die genannten Mittel zur Erzeugung des Korrelationssteuersignales Mittel (70) zur Durchführung einer logischen EXCLUSIV-ODER-Funktion an einem Vorzeichenbit und einem Code-Bit enthalten.

11. Empfänger nach Anspruch 1, dadurch gekennzeichnet, daß jeder der genannten Kanäle (24) folgendes enthält:

   a) Mittel (32) zur Beseitigung eines Dopplergehaltes des empfangenen Trägers aus den phasengerechten (I) und den in Phasenquadratur befindlichen (Q) Tastungsproben;

   b) Mittel (48, 50, 52, 34, 36) zur Erzeugung eines PN-Code-Bezuges, welcher eine Wiederholung des empfangenen PN-Code-Signales ist, wobei der PN-Code-Bezug eine phasengerechte Komponente (IREF) und eine in Phasenquadratur befindliche Komponente (QREF) aufweist; und

   c) Mittel (38, 40), welche mit den Mitteln (32) zur Beseitigung des Doppleranteils des Trägers und den Mitteln (48, 50, 52, 34, 36) zur Erzeugung der genannten PN-Code-Bezugswiederholung gekoppelt sind, um die genannten I-und Q-Tastungsproben mit den genannten IREF-bzw. QREF-Komponenten des wiederholten PN-Code-Signales zu korrelieren, wobei die Korrelationsmittel (38, 40) eine Anzahl von I-Y-Vielfachanschluß-Korrelatoren und -Integratoren (88-102) und eine Anzahl von Q-Y-Vielfachanschluß-Korrelatoren und Integratoren (114-128) enthalten, wobei der phasengerechte Gewichtungswähler (84) so ausgebildet ist, daß er von ihm gewählte Gewichtungen zu den I-Y-Vielfachanschluß-Korrelatoren und Integratoren (88-102) liefert und der Phasenquadratur-Gewichtungswähler (110) so ausgebildet ist, daß er von ihm gewählte Gewichtungen zu den Q-Y-Vielfachanschluß-Korrelatoren und -Integratoren (114-128) liefert.

12. Empfänger nach Anspruch 11, dadurch gekennzeichnet, daß jede Gewichtungseinrichtung ein Register (82) zur Speicherung des vorbestimmten maximalen Gewichtungsfaktors (R) enthält.

13. Empfänger nach Anspruch 12, dadurch gekennzeichnet, daß der vorbestimmte maximale Gewichtungsfaktor unter programmierbarer Steuerung veränderbar ist.

14. Empfänger nach Anspruch 12, dadurch gekennzeichnet, daß der vorbestimmte maximale Gewichtungsfaktor (R) für ein spezifisches Korrelationsintervall ($T_{cj}$) eine Konstante ist.

15. Empfänger nach Anspruch 11, dadurch gekennzeichnet, daß die Empfangseinrichtungen (14) Zwischenfrequenz-Tastungsmittel enthalten.

16. Empfänger nach Anspruch 11, dadurch gekennzeichnet, daß die Empfangseinrichtungen (14) Basisband-Tastungseinrichtungen enthalten.

17. Empfänger nach Anspruch 16, dadurch gekennzeichnet, daß die Korrelationseinrichtungen Mittel zur Korrelation der genannten I-Tastungsproben und Q-Tastungsproben nur mit der phasengerechten Komponente (IREFX) des genannten intern erzeugten PN-Code-Bezuges enthalten.

18. Empfänger nach Anspruch 11, dadurch gekennzeichnet, daß jede Eingangs-Gewichtungseinrichtung folgendes enthält: Registermittel (82) zur Speicherung des vorbestimmten maximalen Gewichtungsfaktors (R); und logische Schaltungsmittel (86, 112), welche mit den Gewichtungswählermitteln (84, 110) gekoppelt sind, um die genannten Gewichtungswählersignale in Abhängigkeit von Signalen zu erzeugen, welche die Vorzeichen und Beträge der genannten Tastungsproben repräsentieren.

**19.** Empfänger nach Anspruch 18, dadurch gekennzeichnet, daß die Empfangseinrichtungen (14) Analog-/Digital-Wandlermittel zur Umwandlung jeder phasengerechten (I) und in Phasenquadratur befindlichen (Q) Tastungsprobe in einen Digitalwert mit einem Vorzeichenbit und einem einzelnen Betragsbit enthalten, und daß die genannten logischen Schaltungsmittel Einrichtungen (86, 112) zur Durchführung einer EXCLUSIV-ODER-Funktion an dem Vorzeichenbit der phasengerechten Tastungsprobe und an dem Betragsbit der phasengerechten Tastungsprobe, sowie einer logischen EXCLUSIV-ODER-Funktion an dem Vorzeichenbit der in Phasenquadratur befindlichen Tastungsprobe und an dem Betragsbit der in Phasenquadratur befindlichen Tastungsprobe enthalten.

**20.** Empfänger nach Anspruch 11, dadurch gekennzeichnet, daß jede Korrelationseinrichtung (24) folgendes enthält:

Additionssteuermittel (74), welche mit der Gewichtungseinrichtung (67) gekoppelt sind und in der Weise arbeiten, daß sie bestimmen, ob jede aus einer Folge von Gewichtungen mit Bezug auf einen akkumulierten Wert der Gewichtungen entsprechend einem Korrelationssteuersignal addiert oder subtrahiert wird;
Mittel (70) zur Erzeugung des genannten Korrelationssteuersignales durch Vergleichen des Vorzeichens jeder entsprechenden Tastung mit einem PN-Code-Bezugssignal; und
Integratormittel (68, 69), welche mit den Additionssteuermitteln (74) und den korrelationssteuersignalerzeugenden Mitteln (70) gekoppelt sind, um die Gewichtungen über ein Korrelationszeitintervall anzusammeln und zu integrieren.

**21.** Empfänger nach Anspruch 20, dadurch gekennzeichnet, daß die korrelationssteuersignalerzeugenden Mittel Einrichtungen (70) zur Durchführung einer logischen EXCLUSIV-ODER-Funktion an einem Vorzeichenbit und einem Codebit enthalten.

**22.** Empfänger nach Anspruch 1, dadurch gekennzeichnet, daß die genannten Korrelationseinrichtungen (24) eine Mehrzahl von I-Y-Mehrfachanschluß-Korrelatoren und -Integratoren (88-102) und eine Mehrzahl von Q-Y-Mehrfachanschluß-Korrelatoren und -Integratoren (114-128) enthalten, wobei der phasengerechte Gewichtungswähler (84) so ausgebildet ist, daß er von ihm gewählte Gewichtungen an die I-Y-Mehrfachanschluß-Korrelatoren und -Integratoren (88-102) liefert und der Phasenquadratur-Gewichtungswähler (110) so ausgebildet ist, daß er die von ihm gewählten Gewichtungen zu den Q-Y-Mehrfachanschluß-Korrelatoren und -Integratoren (114-128) liefert.

**23.** Empfänger nach Anspruch 22, dadurch gekennzeichnet, daß jede gewichtungsauswahlsignalerzeugende Einrichtung logische Schaltungsmittel (86, 112) zur Erzeugung der Gewichtungsauswahlsignale in Abhängigkeit von Signalen enthält, welche die Vorzeichen und Beträge der genannten I-Tastungsproben repräsentieren, die an eine erste (86) der genannten logischen Schaltungen geliefert werden, welche mit dem phasengerechten Gewichtungssignalwähler (84) gekoppelt ist, und in Abhängigkeit von Signalen, welche die Vorzeichen und Beträge der Q-Tastungsproben repräsentieren, welche an eine zweite (112) der genannten logischen Schaltungen geliefert werden, welche mit dem Phasenquadratur-Gewichtungssignalwähler (110) gekoppelt ist.

**Revendications**

**1.** Récepteur de système global de positionnement, comprenant :

des moyens de réception (14) pour effectuer un échantillonnage d'une porteuse reçue modulée en code PN afin de créer des échantillons en phase (I) et en quadrature (Q) ;
des moyens de traitement de signaux (16) couplés à des sorties desdits moyens de réception (14) pour retirer une fréquence Doppler et une modulation en code PN de ladite porteuse modulée, lesdits moyens de traitement de signaux (16) comprenant une pluralité de voies (22), chacune desdites voies (22) comprenant des moyens corrélateurs (24) pour corréler lesdits échantillons I et Q avec au moins une composante en phase (IREFX) d'une référence de code PN créée de manière interne ;
et des moyens (18) couplés auxdits moyens de traitement de signaux (16) pour traiter les sorties des moyens corrélateurs (24) afin de déterminer la phase dudit signal de porteuse, de fournir des signaux de commande sur plusieurs voies auxdits moyens de traitement de signaux (16) et d'estimer une pseudo-distance et une pseudo-vitesse radiale,

caractérisé en ce que chacun des moyens corrélateurs (24) comprend des moyens (82, 84, 86, 110, 112) pour pondérer les échantillons en fonction de leurs amplitudes, et chacun des moyens de pondération comprend des moyens (86, 112) pour produire des signaux de sélection de poids en phase (IMII) et en quadrature (IMQI)

extraits des signes et des amplitudes des échantillons et indiquant respectivement si les amplitudes analogiques des échantillons en phase (I) et en quadrature (Q) sont extérieures à un seuil prédéterminé, et un sélecteur de poids en phase (84) commandé par le signal de sélection de poids en phase et un sélecteur de poids en quadrature (110) commandé par le signal de sélection de poids en quadrature, chaque sélecteur de poids (84, 110) étant conçu pour être commandé afin d'appliquer dans les moyens corrélateurs (24) un facteur maximal prédéterminé (R) de pondération quand le signal correspondant de sélection de poids (IMTI, IMQI) indique une amplitude analogique d'échantillon extérieure au seuil prédéterminé, et afin d'appliquer dans les moyens corrélateurs (24) un facteur de pondération qui est une fonction quantifiée de l'amplitude analogique d'échantillon quand le signal correspondant de sélection de poids (IMII, IMQI) indique une amplitude analogique d'échantillon à l'intérieur du seuil prédéterminé.

2. Récepteur selon la revendication 1, caractérisé en ce que les moyens de réception (14) comprennent des moyens de conversion analogique-numérique pour convertir chaque échantillon en phase (I) et en quadrature (Q) en une valeur numérique ayant un bit de signé et (N-1) bits d'amplitude, et en ce qué chaque sélecteur de poids (67 ; 73) est conçu pour appliquer dans les moyens corrélateurs (24) un facteur de pondération qui est (1 + IMI), où IMI est l'amplitude quantifiée représentée par les bits d'amplitude de l'échantillon, quand le signal correspondant de sélection de poids indique une amplitude analogique d'échantillon à l'intérieur du seuil prédéterminé, et en ce que l'amplitude maximale quantifiée $IMI_{MAX}$ représentée par les bits d'amplitude de l'échantillon numérisé correspond à une amplitude analogique d'échantillon extérieure au seuil prédéterminé.

3. Récepteur selon la revendication 1, caractérisé en ce que lesdits moyens de réception (14) comprennent des moyens d'échantillonnage à fréquence intermédiaire pour produire lesdits échantillons I et Q.

4. Récepteur selon la revendication 1, caractérisé en ce que lesdits moyens de réception (14) comprennent des moyens d'échantillonnage à bande de base pour produire lesdits échantillons I et Q.

5. Récepteur selon la revendication 4, caractérisé en ce que lesdits moyens de corrélateur (24) comprennent des moyens (38, 40) pour corréler lesdits échantillons I et Q avec la composante en phase (IREFX) seulement de ladite référence de code PN produite de manière interne.

6. Récepteur selon la revendication 1, caractérisé en ce que les moyens de pondération desdits moyens corrélateurs (24) comprennent :

des moyens de registre (82) pour stocker le facteur maximal prédéterminé de pondération (R) ; et
des moyens logiques (86, 112) couplés auxdits moyens de sélection de poids (84, 110) pour produire lesdits signaux de sélection de poids en réponse à des-signaux représentant les signes et amplitudes desdits échantillons.

7. Récepteur selon la revendication 6, caractérisé en ce que les moyens de sélection de poids comprennent:

un multiplexeur (84) de pondération de I ayant une première entrée couplée auxdits moyens de registre (82) et une deuxième entrée couplée pour recevoir un poids de croisement interne ; et
un multiplexeur (110) de pondération de Q ayant une première entrée couplée auxdits moyens de registre (82) et une deuxième entrée couplée pour recevoir un poids de croisement interne.

8. Récepteur selon la revendication 6, caractérisé en ce que les moyens de réception (14) comprennent des moyens de conversion analogique-numérique pour convertir chaque échantillon en phase (I) et en quadrature (Q) en une valeur numérique ayant un bit de signe et un seul bit d'amplitude, et en ce que lesdits moyens logiques comprennent des moyens (86, 112) pour effectuer une fonction logique OU exclusif avec le bit de signe d'échantillon en phase et le bit d'amplitude d'échantillon en phase, et une fonction logique OU exclusif avec le bit de signe d'échantillon en quadrature et le bit d'amplitude d'échantillon en quadrature.

9. Récepteur selon la revendication 1, caractérisé en ce que chacun des moyens corrélateurs (24) comprend des moyens de commande (74) d'additionneur couplés aux moyens de pondération (67) et fonctionnant pour déterminer si chacun d'une succession desdits poids est additionné à, ou soustrait d'une valeur accumulée desdits poids en fonction d'un signal de commande de corrélateur ;

des moyens (70) pour produire ledit signal de commande de corrélateur en comparant le signe de chaque échantillon correspondant avec un signal de référence de code PN ; et

des moyens intégrateurs (68, 69) couplés auxdits moyens de commande (74) d'additionneur et auxdits moyens de production de signal (70) de commande de corrélateur pour accumuler et intégrer lesdits poids sur un intervalle de temps de corrélation.

10. Récepteur selon la revendication 9, caractérisé en ce que lesdits moyens de production de signal de commande de corrélateur comprennent des moyens (70) pour effectuer une fonction logique OU exclusif avec un bit de signe et un bit de code.

11. Récepteur selon la revendication 1, caractérisé en ce que chacune desdites voies (24) comprend:

(a) des moyens (32) pour retirer une porteuse Doppler reçue desdits échantillons en phase (I) et en quadrature (Q) ;

(b) des moyens (48, 50, 52, 34, 36) pour produire une référence de code PN qui est une réplique dudit code PN reçu, ladite référence de code PN ayant une composante en phase (IREF) et une composante en quadrature (QREF) ; et

(c) des moyens (38, 40) couplés auxdits moyens (32) de suppression de porteuse Doppler et auxdits moyens (48, 50, 52, 34, 36) pour produire une référence de code PN, pour corréler lesdits échantillons I et Q avec respectivement lesdites composantes IREF et QREF dudit code PN répliqué, lesdits moyens de corrélation (38, 40) comprenant une pluralité de corrélateurs-intégrateurs (88-102) I à Y prises multiples et une pluralité de corrélateurs-intégrateurs (114-128) Q à Y prises multiples, avec le sélecteur de poids en phase (84) disposé pour appliquer ainsi des poids sélectionnés aux corrélateurs-intégrateurs (88-102) I à Y prises multiples, et le sélecteur de poids en quadrature (110) disposé pour appliquer ainsi des poids sélectionnés aux corrélateurs-intégrateurs (114-128) Q à Y prises multiples.

12. Récepteur selon la revendication 11, caractérisé en ce que chacun des moyens de pondération comprend des moyens de registre (82) pour stocker le facteur maximal (R) prédéterminé de pondération.

13. Récepteur selon la revendication 12, caractérisé en ce que le facteur maximal prédéterminé de pondération est variable sous une commande programmée.

14. Récepteur selon la revendication 12, caractérisé en ce que le facteur maximal (R) prédéterminé de pondération est une constante pendant un intervalle spécifique ($T_{cj}$) de corrélation.

15. Récepteur selon la revendication 11, caractérisé en ce que lesdits moyens de réception (14) comprennent des moyens d'échantillonnage à fréquence intermédiaire.

16. Récepteur selon la revendication 11, caractérisé en ce que lesdits moyens de réception (14) comprennent des moyens d'échantillonnage à bande de base.

17. Récepteur selon la revendication 16, caractérisé en ce que lesdits moyens de corrélateur (24) comprennent des moyens pour corréler lesdits échantillons I et Q avec la composante en phase (IREFX) seulement de ladite référence de code PN produite de manière interne.

18. Récepteur selon la revendication 11, caractérisé en ce que chacun desdits moyens de pondération d'entrée comprend:

des moyens de registre (82) pour stocker le facteur maximal prédéterminé de pondération (R) ; et

des moyens logiques (86, 112) couplés auxdits moyens de sélection de poids (84, 110) pour produire lesdits signaux de sélection de poids en réponse à des signaux représentant les signes et amplitudes desdits échantillons.

19. Récepteur selon la revendication 18, caractérisé en ce que les moyens de réception (14) comprennent des moyens de conversion analogique-numérique pour convertir chaque échantillon en phase (I) et en quadrature (Q) en une valeur numérique ayant un bit de signe et un seul bit d'amplitude, et en ce que lesdits moyens logiques comprennent des moyens (86, 112) pour effectuer une fonction logique OU exclusif avec le bit de signe d'échantillon en phase et le bit d'amplitude d'échantillon en phase, et une fonction logique de OU exclusif avec le bit de signe d'échantillon en quadrature et le bit d'amplitude d'échantillon en quadrature.

**20.** Récepteur selon la revendication 11, caractérisé en ce que chacun des moyens de corrélation (24) comprend des moyens de commande (74) d'additionneur couplés aux moyens de pondération (67) et fonctionnant pour déterminer si chacun d'une succession desdits poids est additionné à, ou soustrait d'une valeur accumulée desdits poids en fonction d'un signal de commande de corrélateur;

des moyens (70) pour produire ledit signal de commande de corrélateur en comparant le signe de chaque échantillon correspondant avec un signal de référence de code PN ; et
des moyens intégrateurs (68, 69) couplés auxdits moyens de commande (74) d'additionneur et auxdits moyens de production de signal (70) de commande de corrélateur pour accumuler et intégrer lesdits poids sur un intervalle de temps de corrélation.

**21.** Récepteur selon la revendication 20, caractérisé en ce que lesdits moyens pour produire un signal de commande de corrélateur comprennent des moyens (70) pour effectuer une fonction logique OU exclusif avec un bit de signe et un bit de code.

**22.** Récepteur selon la revendication 1, caractérisé en ce que lesdits moyens corrélateurs (24) comprennent une pluralité de corrélateurs-intégrateurs (88-102) I à Y prises multiples et une pluralité de corrélateurs-intégrateurs (114-128) Q à Y prises multiples, avec le sélecteur de poids en phase (84) disposé pour appliquer ainsi des poids sélectionnés aux corrélateurs-intégrateurs (88-102) I à Y prises multiples, et le sélecteur de poids en quadrature (110) disposé pour appliquer ainsi des poids sélectionnés aux corrélateurs-intégrateurs (114-128) Q à Y prises multiples.

**23.** Récepteur selon la revendication 22, caractérisé en ce que chacun des moyens pour produire un signal de sélection de poids comprend des moyens logiques (86, 112) pour produire les signaux de sélection de poids, en réponse à des signaux représentant les signes et amplitudes desdits échantillons I fournis à un premier (86) desdits moyens logiques couplé au sélecteur de poids en phase (84) et à des signaux représentant les signes et amplitudes desdits échantillons Q fournis à un deuxième (112) desdits moyens logiques couplé au sélecteur de poids en quadrature (110).

_Fig. 1_

*Fig. 2*

*Fig. 3*

Fig. 4

EP 0 460 862 B1

*Fig. 5*

*Fig. 6*

EP 0 460 862 B1

*Fig. 7*

TO OTHER Y I or Q TAPS

N-BIT A/D WEIGHTING (COMMON TO ALL I or Q CORRELATOR Y-TAPS)

ONE I or Q CORRELATOR/INTEGRATOR TAP 88

INSIDE CROSSING WEIGHT

1 +|M|

2:1 WEIGHTING MUX — 73

O

L

SEL

R FACTOR REGISTER — 72
$(1+|M|+K)_{MAX}$

R FACTOR

L

1

L

OUTSIDE CROSSING WEIGHT

$|M|_{MAX}$

I or Q SAMPLE

WEIGHTED A/D SAMPLE BWTG

ADDER CONTROL

75

B

68 — A

ADDER

16

16

ACCUMULATOR REGISTER — 69

16

$T_{cj}$

OUTPUT REGISTER — 71

I or Q OUTPUT CORRELATED/ INTEGRATED DATA

WHEN: CIN = O, ADD A+B
CIN = 1, SUBTRACT A-B ≡ A+B̄ +CIN

CIN CONTROL

CIN CONTROL

I OR Q SIGN BIT SAMPLE (S)

XOR GATE — 70

PN-CODE REFERENCE C
CIX (7:0) or CQX (7:0)
(FROM FIG. 5)

Fig. 8

X = CHANNEL NUMBER
Y = TAP NUMBER
N = ACTIVE LOW LOGIC

31

*Fig. 9*

_Fig. 10_

*Fig. 11A*

*Fig. 11B*

EP 0 460 862 B1

*Fig. 12*

MAXIMUM L1 or L2 SATELLITE TRANSMITTERS RECEIVED
POWER AFTER CORRELATION AND INTEGRATION

MAXIMUM L1 or L2 SATELLITE TRANSMITTERS
RECEIVED POWER AT GPS RECEIVER 10

MINIMUM SATELLITE TRANSMITTERS RECEIVER
POWER AT GPS RECEIVER 10

L1 L2

EXCESS
LINEAR
RANGE

SNI = 42 dB

LSB OVERFLOW/LINEAR

22 dB — 20 dB — 22 dB

16 BIT
CORRELATOR
OUTPUT
(FROM I or Q
OUTPUT
REGISTER 176

| S | X | X | X | X | X | X | X | I | I | I | I | I | 0 | 0 | 0 |

6 X 6 = 36 dB

NOISE LEVEL
(248 LEVELS)

6 dB/BIT X 7 BITS
= 42 dB

MAX SIGNAL + NOISE = ±32767

*Fig. 13*

EP 0 460 862 B1